# EUROPÄISCHE PATENTSCHRIFT

(11) **EP 3 941 673 B1**
(45) Veröffentlichungstag und Bekanntmachung des Hinweises auf die Patenterteilung: **07.06.2023**
(21) Anmeldenummer: 20712878.6
(22) Anmeldetag: 13.03.2020
(51) Int. Cl.: B23F 1/02, B23F 5/04, B23F 21/02, B23Q 17/09, B23F 23/12, G05B 19/4065, B24B 53/085, B24B 53/075

(54) **VERFAHREN ZUR AUTOMATISCHEN PROZESSÜBERWACHUNG BEIM KONTINUIERLICHEN WÄLZSCHLEIFEN**
METHOD FOR AUTOMATIC PROCESS MONITORING IN CONTINUOUS GENERATION GRINDING
PROCÉDÉ DE SURVEILLANCE AUTOMATIQUE DE PROCESSUS LORS DE LA RECTIFICATION EN CONTINU

(30) Priorität: 22.03.2019 CH 3742019
(43) Veröffentlichungstag der Anmeldung: 26.01.2022
(73) Patentinhaber: Reishauer AG, 8304 Wallisellen (CH)
(72) Erfinder: DIETZ, Christian, 8304 Wallisellen (CH); EGER, André, 4323 Wallbach (CH); GRAF, Jürg, 8320 Fehraltorf (CH)
(74) Vertreter: Detken, Andreas
(86) Internationale Anmeldenummer: PCT/EP2020/056862
(87) Internationale Veröffentlichungsnummer: WO 2020/193228

(56) Entgegenhaltungen:
- EP-A1- 3 345 707
- EP-B1- 2 484 490
- DE-T5-112012 006 475
- JP-A- 2016 132 088
- US-A- 3 809 870
- US-A- 4 561 216
- US-A- 4 744 179
- US-A- 4 894 644
- US-A- 5 070 655
- US-A- 5 904 457
- US-A1- 2006 025 050
- US-A1- 2017 095 868
- US-B1- 6 290 574
- US-B2- 9 393 631

## Beschreibung

### TECHNISCHES GEBIET

Die vorliegende Erfindung betrifft ein Verfahren gemäß dem Oberbegriff des Anspruchs 1 zur automatischen Prozessüberwachung beim kontinuierlichen Wälzschleifen mit einer Wälzschleifmaschine. Ein derartiges Verfahren ist aus dem Dokument US 2017/0095868 A1 bekannt.

Die Erfindung betrifft des Weiteren eine Wälzschleifmaschine, die dazu hergerichtet ist, ein solches Verfahren auszuführen, sowie ein Computerprogramm zur Ausführung eines solchen Verfahrens.

### STAND DER TECHNIK

Beim kontinuierlichen Wälzschleifen wird ein Zahnradrohling im Wälzeingriff mit einer schneckenförmig profilierten Schleifscheibe (Schleifschnecke) bearbeitet. Das Wälzschleifen ist ein sehr anspruchsvolles, generierendes Bearbeitungsverfahren, das auf einer Vielzahl von synchronisierten, präzisen Einzelbewegungen basiert und von vielen Randbedingungen beeinflusst wird. Informationen zu den Grundlagen des kontinuierlichen Wälzschleifens finden sich z.B. im Buch von H. Schriefer et al., "Continuous Generating Gear Grinding", Eigenverlag Reishauer AG, Wallisellen 2010, ISBN 978-3-033-02535-6, Kapitel 2.3 ("Basic Methods of Generating Grinding"), Seiten 121 bis 129.

Theoretisch wird die Zahnflankenform beim kontinuierlichen Wälzschleifen allein durch die abgerichtete Profilform der Schleifschnecke und die Einstelldaten der Maschine bestimmt. Praktisch treten jedoch in der automatisierten Fertigung Abweichungen vom Idealzustand auf, die die Schleifresultate entscheidend beeinflussen können. In dem genannten Buch von Schriefer et al. wird hierauf im Kapitel 6.9 ("Practical Know-How for Statistical Individual Deviation Analysis") auf den Seiten 531 bis 541 und im Kapitel 6.10 ("Analysing and Eliminating Gear Tooth Deviations") auf den Seiten 542 bis 551 eingegangen.

Traditionell wird die Qualität der im Wälzschleifverfahren gefertigten Verzahnungen erst nach dem Ende der Bearbeitung durch Verzahnungsmessungen ausserhalb der Bearbeitungsmaschine ("offline") anhand von einer Vielzahl von Messgrössen beurteilt. Dabei existieren verschiedene Normen, die vorschreiben, wie die Verzahnungen zu messen sind und wie zu prüfen ist, ob sich die Messergebnisse innerhalb oder ausserhalb einer Toleranzvorgabe befinden. Die Normen geben auch Hinweise darauf, welche Beziehungen zwischen den Messergebnissen und den Gebrauchseigenschaften der Verzahnung bestehen. Eine Zusammenfassung zu solchen Verzahnungsmessungen findet sich z.B. im schon genannten Buch von Schriefer et al. in Kapitel 3 ("Quality Assurance in Continuous Generating Gear Grinding") auf den Seiten 155 bis 200.

Bei einer manuellen Bedienung erkennt der Bediener Abweichungen von den Vorgaben im Bearbeitungsprozess aufgrund seiner Erfahrung, oder solche Abweichungen werden bei der anschliessenden Verzahnungsprüfung erkannt. Der Bediener führt dann den Bearbeitungsprozess durch veränderte Einstellwerte wieder in einen stabilen Bereich. Zur Automatisierung der Bearbeitung ist es allerdings wünschenswert, dass eine Prozessüberwachung automatisch stabilisierend eingreift.

Aus dem Stand der Technik sind geeignete Strategien für die Prozessüberwachung beim kontinuierlichen Wälzschleifen bislang nur ansatzweise bekannt.

So beschreibt die Firmenpräsentation "NORDMANN Tool Monitoring", Version vom 05.10.2017, abgerufen am 25.02.2019 von https://www.nordmann.eu/pdf/praesentation/Nordmann_presentation ENG.pdf, verschiedene Massnahmen zur Werkzeugüberwachung an allgemeinen spanenden Werkzeugmaschinen (Seite 3). Die Werkzeugüberwachung kann prozessbegleitend während der Zerspanung über Messungen der Wirkleistung, der Zerspankraft oder des Körperschalls erfolgen (Seite 7). Sie kann insbesondere zur Erkennung von Werkzeugbruch und -verschleiss dienen (Seiten 9 bis 14). Für die verschiedenen Messaufgaben im Rahmen der Werkzeugüberwachung steht eine Vielzahl von Sensoren zur Verfügung (Seiten 31 bis 37). Die Wirkleistung kann über Strommessungen ermittelt werden (Seite 28). Hierfür sind entsprechende Stromaufnehmer bekannt (Seite 37), oder die Stromüberwachung kann sensorlos anhand von Daten aus der CNC-Steuerung erfolgen (Seite 40). In der Präsentation sind Anwendungsbeispiele in verschiedenen spanenden Bearbeitungsverfahren dargestellt, darunter auch in knapper Form einige wenige Beispiele für Verfahren, die bei der Zahnradbearbeitung relevant sind, insbesondere Wälzfräsen (Seiten 41 und 42), Hartschälen (Seite 59) und Honen (Seite 60). Auch Abrichtverfahren werden behandelt (Seite 92). Das kontinuierliche Wälzschleifen wird dagegen lediglich am Rande erwähnt (z.B. Seiten 3 und 61).

Informationen zum (Rund-) Schleifen und Abrichten finden sich auch in Klaus Nordmann, "Prozessüberwachung beim Schleifen und Abrichten", Schleifen + Polieren 05/2004, Fachverlag Möller, Velbert (DE), Seiten 52-56. Auch hier wird aber auf das kontinuierliche Wälzschleifen nicht näher eingegangen.

Verfahren, bei denen Messgrössen im Kontext des Wälzscheifens von Verzahnungen ermittelt werden, sind beispielsweise aus den folgenden Dokumenten bekannt: US20170095868A1, US4561216A, EP3345707A1 und US5904457A.

Häufig werden beim Wälzschleifen keramisch gebundene, abrichtbare Schleifscheiben eingesetzt. Ein stark störendes Problem bei solchen Schleifschnecken sind lokale Ausbrüche in einem oder mehreren Schneckengängen der Schleifscheibe. Schleifscheibenausbrüche führen dazu, dass die Zahnflanken der zu bearbeitenden Verzahnung nicht über ihre ganze Länge vollständig bearbeitet werden, wenn sie im Bereich des Ausbruchs mit der Schleifscheibe in Eingriff kommen. Meist sind nicht alle Werkstücke eines Loses in gleichem Masse von einem Schleifscheibenausbruch betroffen, da die Schleifscheibe üblicherweise während der Fertigung eines Loses entlang ihrer Längsachse verschoben wird, um fortlaufend noch unverbrauchte Bereiche der Schleifscheibe mit dem Werkstück in Eingriff zu bringen (sogenanntes Shiften). Werkstücke, die ausschliesslich von intakten Bereichen der Schleifscheibe bearbeitet wurden, zeigen in der Regel keine Fehler.

Dies erschwert die Erkennung von Bearbeitungsfehlern aufgrund von Schleifscheibenausbrüchen. Da bei der Verzahnungsprüfung meist nur Stichprobenkontrollen erfolgen, werden Bearbeitungsfehler aufgrund von Schleifscheibenausbrüchen häufig bei der Verzahnungsprüfung nicht oder erst sehr spät erkannt. Nicht selten treten solche Fehler erst nach dem Einbau des Werkstücks in ein Getriebe bei einer End-of-Line-Prüfung (EOL-Prüfung) zutage. Dies zieht kostspielige Demontageprozesse nach sich. Zudem kann derselbe Bearbeitungsfehler in der Zwischenzeit schon bei einer Vielzahl weiterer Werkstücke aufgetreten sein. Dies kann dazu führen, dass unter Umständen erhebliche Teile eines Fertigungsloses als NIO-Teile (NIO = "nicht in Ordnung") verworfen werden müssen. Schon ein einziger nicht erkannter Schleifscheibenausbruch kann daher sehr hohe Folgekosten verursachen. Deshalb ist es wünschenswert, Schleifscheibenausbrüche im Rahmen einer automatischen Prozessüberwachung zuverlässig zu erkennen oder sogar zu verhindern.

Neben Schleifscheibenausbrüchen können weitere Erscheinungen die Qualität der gefertigten Verzahnungen über ein Fertigungslos hinweg negativ beeinflussen. So ist bekannt, dass Rohteile häufig nicht gleich vorbearbeitet werden oder Härteunterschiede und/oder Härteverzüge an den Zahnflanken der Rohteile auftreten. Auch können kleine Unterschiede in der Zusammensetzung der Schleifschnecke zu unterschiedlichem Schleif- bzw. Abrichtverhalten führen. Auch ist mangelhafte Qualität beim Abrichten häufig die Ursache von Qualitätseinbussen bei der gefertigten Verzahnung. Zudem verkleinert sich prozessbedingt beim Abrichten der Radius der Schleifschnecke um den jeweiligen Abrichtbetrag. Daher können sich während der Bearbeitung eines Fertigungsloses die Eingriffsverhältnisse beim Wälzschleifen drastisch verändern und oft auch verschlechtern. Die beim Start der Bearbeitung ausgewählten Einstellwerte müssen dann verändert werden. Trotz aller Vorkehrungen für die Sicherstellung einer konstanten Bearbeitungsqualität ist es also unvermeidlich, dass bei jedem Werkstück individuelle Unterschiede bei der Bearbeitung entstehen.

Beim automatisierten Wälzschleifen eines Fertigungsloses werden also vor der Bearbeitung die Einstellwerte, die Werkzeuge, die Spannmittel und die Mess- und Automatisierungstechnik festgelegt. Beim Start der Bearbeitung überwacht ein Bediener dann den Prozess, und nachdem eine ausschussfreie Fertigung erreicht wurde, wird das Fertigungslos dann quasi automatisch weiterbearbeitet. Dieser Prozess kann durch zwei wesentliche Einflüsse instabil bzw. gestört werden:
erstens durch das Werkzeug, also durch Ausbrüche oder durch schlechtere Eingriffsbedingungen nach dem Abrichten; und
zweitens durch das Werkstück, welches Bearbeitungsfehler in der Vorbearbeitung aufweisen kann.

Eine Prozessüberwachung sollte diese Einflüsse erfassen und Massnahmen zur automatisierten Fertigbearbeitung einleiten.

### DARSTELLUNG DER ERFINDUNG

Es ist daher eine Aufgabe der vorliegenden Erfindung, ein Verfahren zur Prozessüberwachung beim kontinuierlichen Wälzschleifen anzugeben, mit dem Prozessabweichungen frühzeitig erkannt und/oder verhindert werden können.

Diese Aufgabe wird durch das Verfahren des Anspruchs 1 gelöst. Weitere Ausführungsformen sind in den abhängigen Ansprüchen angegeben.

Erfindungsgemäss wird also die Prozessüberwachung dazu genutzt, in einer Wälzschleifmaschine frühzeitig Hinweise auf unzulässige Abweichungen des Bearbeitungsprozesses von seinem normalen Ablauf zu erhalten und daraus einen Warnindikator abzuleiten. Der Warnindikator kann im einfachsten Fall z.B. eine binäre boolesche Variable sein, die binär angibt, ob ein Verdacht auf eine Prozessabweichung vorliegt oder nicht. Der Warnindikator kann aber auch z.B. eine Zahl sein, die umso grösser ist, je grösser die errechnete Wahrscheinlichkeit einer Prozessabweichung ist, oder eine Vektorgrösse, die zusätzlich angibt, aufgrund welcher Messung(en) der Verdacht auf eine Prozessabweichung besteht oder welcher Art die erkannte mögliche Prozessabweichung ist. Viele andere Implementierungen des Warnindikators sind ebenfalls denkbar.

Bei der zu erkennenden Prozessabweichung handelt es sich um einen Schleifscheibenausbruch. Entsprechend handelt es sich bei dem Warnindikator um einen Warnindikator, der auf einen möglichen Schleifscheibenausbruch hinweist. Wie einleitend schon festgehalten wurde, können unerkannt gebliebene Schleifscheibenausbrüche dazu führen, dass grosse Teile eines Fertigungsloses als NIO-Teile verworfen werden müssen, und es ist daher von besonderem Vorteil, wenn die Prozessüberwachung dazu eingerichtet ist, einen Warnindikator abzugeben, der auf mögliche Schleifscheibenausbrüche hinweist.

Anhand des Warnindikators können automatisch verschiedene Aktionen ausgelöst werden. So kann anhand des Warnindikators automatisch entschieden werden, dass das zuletzt bearbeitete Werkstück als NIO-Teil aussortiert oder einer besonderen Nachprüfung zugeführt wird. Anhand des Warnindikators kann auch ein optisches oder akustisches Warnsignal ausgelöst werden, um den Bediener der Wälzschleifmaschine zu veranlassen, eine Sichtkontrolle an der Schleifscheibe vorzunehmen.

Durch den Warnindikator wird eine automatische Überprüfung der Schleifscheibe auf einen Schleifscheibenausbruch ausgelöst, wenn der Warnindikator auf einen Schleifscheibenausbruch hindeutet.

Diese automatische Überprüfung kann auf verschiedene Weisen erfolgen. So ist es z.B. denkbar, zur Überprüfung einen optischen Sensor oder eine digitale Kamera einzusetzen und z.B. mithilfe digitaler Bildverarbeitungsverfahren automatisch festzustellen, ob ein Schleifscheibenausbruch vorliegt. Auch ist es denkbar, zu diesem Zweck akustische Emissionen der Schleifscheibe zu überprüfen, die beim Auftreffen eines Kühlmittelstrahls auf die Schleifscheibe entstehen und über den Kühlmittelstrahl an einen Akustiksensor übertragen werden. Vorteilhaft wird zur automatischen Überprüfung jedoch eine Abrichteinrichung mit einem Abrichtwerkzeug verwendet, wie sie oft ohnehin an der Wälzschleifmaschine vorhanden ist. Dabei kann zur Überprüfung der Schleifscheibe entweder gezielt nur ein Kopfbereich der Schleifschneckengänge überfahren werden, oder es kann ein vollständiger Abrichthub durchgeführt werden, wie er auch beim normalen Abrichten der Schleifscheibe ausgeführt würde.

Wenn nur der Kopfbereich überfahren wird, können konkret die folgenden Schritte ausgeführt werden, sobald der Warnindikator auf einen Schleifscheibenausbruch hindeutet:
Überfahren eines Kopfbereichs der Schleifscheibe mit dem Abrichtwerkzeug;
Ermitteln eines Kontaktsignals während des Überfahrens des Kopfbereichs, wobei das Kontaktsignal einen Kontakt des Abrichtwerkzeugs mit dem Kopfbereich der Schleifscheibe anzeigt; und
Ermitteln eines Ausbruchindikators durch Analyse des Kontaktsignals, wobei der Ausbruchindikator anzeigt, ob ein Schleifscheibenausbruch vorliegt.

Wenn in einem bestimmten Bereich eines Schleifschneckengangs ein Kontakt ausbleibt, ist dies ein starkes Indiz dafür, dass tatsächlich ein Schleifscheibenausbruch vorliegt. Dies wird durch den Ausbruchindikator angezeigt.

Dieses Überfahren des Kopfbereichs mit dem Abrichtwerkzeug kann auch unabhängig vom Wert des Warnindikators in regelmässigen Abständen durchgeführt werden, z.B. nach der Bearbeitung einer vorgegebenen Zahl von Werkstücken, um auch solche Schleifscheibenausbrüche erkennen zu können, die bei der Überwachung der Messgrössen während des Bearbeitungsvorgangs unerkannt geblieben sind.

Der Ausbruchindikator kann im einfachsten Fall wiederum eine binäre boolesche Variable sein, die binär anzeigt, ob ein Ausbruch vorliegt oder nicht. Es sind aber auch weitaus komplexere Implementierungen des Ausbruchindikators denkbar. Insbesondere zeigt der Ausbruchindikator vorzugsweise auch den Ort des Schleifscheibenausbruchs entlang mindestens eines der Schneckengänge auf der Schleifscheibe an.

Der Kontakt des Abrichtwerkzeugs mit dem Kopfbereich der Schleifscheibe kann auf verschiedene Arten detektiert werden. So kann die Wälzschleifmaschine einen Akustiksensor aufweisen, um den Eingriff des Abrichtwerkzeugs mit der Schleifscheibe akustisch anhand des beim Eingriff entstehenden Körperschalls zu detektieren. Das Kontaktsignal wird dann aus einem Akustiksignal abgeleitet, das mit Hilfe des Akustiksensors ermittelt wird. Wenn das Abrichtwerkzeug auf einer motorisch zu einer Drehung angetriebenen Abrichtspindel aufgespannt ist, kann das Kontaktsignal stattdessen oder zusätzlich von einem Leistungssignal abgeleitet werden, das für die Leistungsaufnahme der Abrichtspindel während des Überfahrens des Kopfbereichs repräsentativ ist.

Wenn der Ausbruchindikator das Vorliegen eines Schleifscheibenausbruchs anzeigt, kann das Verfahren vorsehen, dass die Schleifscheibe vollständig abgerichtet wird, um den Schleifscheibenausbruch weiter zu charakterisieren und/oder zu beseitigen.

Wie schon dargelegt, ist es aber auch denkbar, zur Überprüfung der Schleifscheibe auf Ausbrüche direkt einen vollständigen Abrichtvorgang durchzuführen. In diesem Fall erfolgen die Überprüfung der Schleifscheibe auf Ausbrüche und die Charakterisierung der Ausbrüche anhand einer Überwachung dieses Abrichtvorgangs.

Um den Abrichtvorgang zu überwachen und den Schleifscheibenausbruch näher zu charakterisieren, kann während des Abrichtens ein Abrichtleistungssignal ermittelt werden, das für die Leistungsaufnahme der Abrichtspindel und/oder der Werkzeugspindel während des Abrichtens repräsentativ ist, und es kann ein Ausbruchmass durch Analyse des Verlaufs des Abrichtleistungssignals während des Abrichtens ermittelt werden. Das Ausbruchmass spiegelt dabei mindestens ein Charakteristikum des Schleifscheibenausbruchs wider, z.B. wo sich der Schleifscheibenausbruch befindet und/oder wie tief der betroffene Schleifschneckengang in radialer Richtung beschädigt ist.

Das Ausbruchmass kann dann dazu herangezogen werden, automatisch zu entscheiden, ob der Schleifscheibenausbruch sinnvoll durch ein- oder mehrmaliges Abrichten beseitigt werden kann. Wenn dies nicht der Fall ist, kann ein Signal an den Anwender abgegeben werden, dass die Schleifscheibe ausgewechselt werden muss, oder die weitere Bearbeitung kann so gesteuert werden, dass weitere Werkstücke nur noch mit unbeschädigten Bereichen der Schleifschnecke bearbeitet werden.

Die Analyse des Verlaufs des Abrichtleistungssignals zur Ermittlung des Ausbruchmasses kann den folgenden Schritt einschliessen: Ermitteln einer Schwankungsgrösse, wobei die Schwankungsgrösse lokale Veränderungen der Grösse des Abrichtleistungssignals entlang mindestens eines der Schneckengänge anzeigt. Beispielsweise kann diese Schwankungsgrösse direkte Rückschlüsse auf die radiale Tiefe des Schleifscheibenausbruchs zulassen.

Wie schon dargelegt wurde, wird im Rahmen der hier vorgeschlagenen Prozessüberwachung ein Warnindikator für eine Prozessabweichung, insbesondere für einen Schleifscheibenausbruch, ermittelt, um frühzeitig Hinweise auf mögliche Prozessabweichungen zu erhalten. Um diesen Warnindikator zu ermitteln, können verschiedene Messgrössen überwacht werden.

Insbesondere können die überwachten Messgrössen einen Abmassindikator für ein Zahndickenabmass des Werkstücks vor der Bearbeitung umfassen. Wenn der Abmassindikator anzeigt, dass das Zahndickenabmass einen zulässigen Wert übersteigt oder dass sonstige Vorbearbeitungsfehler vorliegen, wird der Warnindikator entsprechend gesetzt, um die Bearbeitung zu unterbrechen, so dass eine Beschädigung der Schleifscheibe vermieden werden kann. Gegebenenfalls kann die Schleifscheibe anschliessend auf mögliche Ausbrüche aufgrund der mangelhaften Vorbearbeitung vorhergehenden Werkstücke untersucht werden.

Der Abmassindikator wird dabei vorteilhaft mit einer ohnehin schon in der Werkzeugmaschine vorhandenen und an sich bekannten Einzentriersonde ermittelt, die dazu ausgebildet ist, berührungslos die Zahnlücken des auf der Werkstückspindel aufgespannten Werkstücks zu vermessen. Mit einem Kalibrierwerkstück kann die Zahndickenmessung kalibriert werden, und es können Grenzwerte definiert werden, die die Signale der Einzentriersonde einhalten müssen, damit das Zahndickenabmass als zulässig angesehen wird. Als Einzentriersonde kann z.B. ein berührungslos arbeitender induktiver oder kapazitiver Sensor verwendet werden. Die Einzentriersonde erfüllt in diesem Fall also eine Doppelfunktion: Einerseits dient sie zum Einzentrieren vor Bearbeitungsbeginn, andererseits dient sie zur Ermittlung eines Zahndickenabmasses. Anstelle der Einzentriersonde kann aber auch ein separater Sensor zur Ermittlung der Zahndicken dienen, z.B. ein separater optischer Sensor, der unter Umständen bei hohen Drehraten bevorzugt sein kann.

Auch kann ein früher Hinweis auf die Gefahr eines Schleifscheibenausbruchs schon dadurch erhalten werden, dass die überwachten Messgrössen eine Drehratenabweichung zwischen einer Drehrate der Werkstückspindel und einer resultierenden Drehrate des Werkstücks umfassen. Wenn eine solche Abweichung vorliegt, deutet dies darauf hin, dass das Werkstück nicht korrekt auf der Werkstückspindel aufgespannt wurde und daher von dieser nicht richtig mitgenommen wurde (Schlupf). Dies kann dazu führen, dass das Werkstück sich nicht in der korrekten Winkellage befindet, wenn es in Eingriff mit der Schleifschnecke gebracht wird, so dass die Schleifschneckengänge nicht korrekt in die Zahnlücken des Werkstücks eintauchen können. In einer solchen Situation wird das Werkstück nicht korrekt bearbeitet, und es können so hohe Bearbeitungskräfte auftreten, dass die Schleifschnecke massiv beschädigt wird. Durch eine Überwachung der Drehraten von Werkstückspindel und Werkstück können solche Situationen im Idealfall erkannt und der Bearbeitungsprozess gestoppt werden, bevor das Werkstück in Eingriff mit der Schleifschnecke kommt. Ein Schleifscheibenausbruch kann gegebenenfalls noch vermieden werden. Wenn eine Drehratenabweichung festgestellt wird, wird der Warnindikator entsprechend gesetzt. Anhand des Warnindikators wird gegebenenfalls die Schleifscheibe auf Beschädigungen untersucht.

Weitere relevante Messgrössen sind die Drehwinkellagen der Werkstückspindel und des darauf aufgespannten Werkstücks vor und nach der Bearbeitung bzw. die Veränderung dieser Drehwinkellagen während der Bearbeitung. Insbesondere können die überwachten Messgrössen eine Winkelabweichung umfassen, die durch einen Vergleich einer Winkellage der Werkstückspindel nach der Bearbeitung des Werkstücks, einer zugeordneten Winkellage des Werkstücks selbst, einer Winkellage der Werkstückspindel vor der Bearbeitung des Werkstücks und einer zugeordneten Winkellage des Werkstücks selbst ermittelt wurde. Wenn diese Winkelabweichung anzeigt, dass sich die Winkeldifferenz zwischen der Winkelstellung nach der Bearbeitung und der Winkelstellung vor der Bearbeitung an der Werkstückspindel und am Werkstück selbst voneinander unterscheiden, ist dies wiederum ein Hinweis darauf, dass das Werkstück nicht korrekt von der Werkstückspindel mitgenommen wurde. Dies bildet wiederum einen Anlass, den Warnindikator entsprechend zu setzen und gegebenenfalls sicherheitshalber die Schleifscheibe auf Beschädigungen zu untersuchen.

Auch die Drehrate bzw. Winkellage des Werkstücks werden dabei vorteilhaft mit der schon erwähnten Einzentriersonde ermittelt Wiederum erfüllt die Einzentriersonde dabei eine Doppelfunktion: Einerseits dient sie zum Einzentrieren vor Bearbeitungsbeginn, andererseits dient sie zur Überwachung des eigentlichen Bearbeitungsvorgangs. Anstelle der Einzentriersonde kann aber auch wiederum ein separater Sensor zur Ermittlung der Drehrate und/oder Winkellage des Werkstücks dienen, z.B. ein separater optischer Sensor, der unter Umständen bei hohen Drehraten bevorzugt sein kann.

Die Einzentriersonde kann vorteilhaft an einer der Schleifscheibe abgewandten Seite des Werkstücks angeordnet sein. Auf diese Weise gibt es keine Kollision zwischen Schleifscheibe und Einzentriersonde und für das Handling des Werkstückes bleibt genügend Platz für parallele, seitlich angeordnete Greifbacken.

Die überwachten Messgrössen können auch ein Zerspanungsleistungssignal umfassen, das eine momentane Zerspanungsleistung während der Bearbeitung jedes einzelnen Werkstücks anzeigt. Der Warnindikator hängt dann vom zeitlichen Verlauf des Zerspanungsleistungssignals über die Bearbeitung eines Werkstücks hinweg ab. Insbesondere kann das Auftreten eines impulsartigen Anstiegs des Zerspanungsleistungssignals während der Bearbeitung ein Indiz für eine Kollision des Werkstücks mit einem Schleifschneckengang sein, die zu einem Schleifscheibenausbruch führen kann, und der Warnindikator kann dies entsprechend anzeigen. Das Zerspanungsleistungssignal kann insbesondere durch eine Strommessung an der Werkzeugspindel ermittelt werden und kann insofern ein Mass für die momentane Stromaufnahme der Werkzeugspindel während der Bearbeitung eines Werkstücks sein.

Eine weitere Möglichkeit zur Bestimmung des Warnindikators ergibt sich aus den folgenden Überlegungen: Bei der Bearbeitung eines Werkstücks mit einer beschädigten Schleifscheibe ist im Bereich des Schleifscheibenausbruchs die abgetragene Materialmenge kleiner als in den intakten Bereichen der Schleifscheibe. Im Verlauf der Shiftbewegung geraten die Werkstücke zunehmend in den Bereich des Schleifscheibenausbruchs hinein und/oder aus diesem Bereich heraus. Entsprechend wird die abgetragene Materialmenge pro Werkstück erst absinken und dann wieder ansteigen. Dies spiegelt sich direkt in der aufgewendeten Zerspanungsenergie pro Werkstück wider, also im Integral der Zerspanungsleistung über die Zeit.

Das Verfahren kann insofern das Ausführen einer kontinuierlichen oder diskontinuierlichen Shiftbewegung zwischen der Schleifscheibe und den Werkstücken entlang der Werkzeugachse umfassen. Die überwachten Messgrössen können dann einen Zerspanungsenergieindikator für jedes Werkstück umfassen, wobei der Zerspanungsenergieindikator ein Mass für eine integrierte Zerspanungsleistung der Schleifscheibe darstellt, während das jeweilige Werkstück mit der Wälzschleifmaschine bearbeitet wurde. Der Warnindikator kann dann davon abhängen, wie sich der Zerspanungsenergieindikator über die Fertigung mehrerer Werkstücke eines Fertigungsloses hinweg, also von Werkstück zu Werkstück, verändert.

Der Zerspanungsenergieindikator kann dabei insbesondere das Integral der Stromaufnahme der Werkzeugspindel während der Bearbeitung eines einzelnen Werkstücks sein. Stattdessen kann es sich beim Zerspanungsenergieindikator aber auch um einen anderen charakteristischen Wert handeln, der aus der Stromaufnahme der Werkzeugspindel über die Bearbeitung eines einzelnen Werkstücks hinweg abgeleitet wurde, z.B. um einen geeignet ermittelten Maximalwert der Stromaufnahme.

Um auch noch nachträglich eine Analyse vornehmen zu können, ist es von Vorteil, wenn die überwachten Messgrössen und/oder daraus abgeleitete Grössen, insbesondere der Warnindikator, zusammen mit einer eindeutigen Kennung des jeweiligen Werkstücks in einer Datenbank gespeichert werden. Diese Daten können jederzeit später wieder ausgelesen werden, z.B. im Rahmen einer späteren Bearbeitung gleichartiger Werkstücke.

Die vorliegende Erfindung bezieht sich des Weiteren auf eine Wälzschleifmaschine, die dazu ausgebildet ist, das vorstehend erläuterte Verfahren auszuführen. Dazu weist sie auf:
eine Werkzeugspindel, auf der eine schneckenförmig profilierte Schleifscheibe mit einem oder mehreren Schneckengängen aufspannbar und zu einer Drehung um eine Werkzeugachse antreibbar ist;
mindestens eine Werkstückspindel, um jeweils ein vorverzahntes Werkstück zu einer Drehung um eine Werkstückachse anzutreiben; und
eine Maschinensteuerung, die dazu ausgebildet ist, das Verfahren der vorstehend erläuterten Art auszuführen.

Die Wälzschleifmaschine kann dazu weitere Komponenten aufweisen, wie sie vorstehend im Kontext der verschiedenen Verfahren genannt sind.

Insbesondere kann die Wälzschleifmaschine eine Abmassermittlungseinrichtung umfassen, um ein Abmass der Zahndicken eines zu bearbeitenden Werkstücks zu ermitteln. Wie schon erläutert, kann die Abmassermittlungseinrichtung insbesondere Signale von der Einzentriersonde empfangen und auswerten.

Auch kann die Wälzschleifmaschine einen ersten Drehwinkelaufnehmer zum Ermitteln eines Drehwinkels der Werkstückspindel und einen zweiten Drehwinkelaufnehmer zum Ermitteln eines Drehwinkels des Werkstücks um die Werkstückachse aufweisen. Wie schon erläutert, kann als zweiter Drehwinkelaufnehmer wiederum die Einzentriersonde dienen. Aus den Signalen der Drehwinkelaufnehmer können in einer Drehwinkelermittlungseinrichtung die entsprechenden Drehwinkel und in einer Drehratenermittlungseinrichtung die entsprechenden Drehraten abgeleitet werden.

Die Maschinensteuerung der Wälzschleifmaschine kann zudem eine Zerspanungsleistungsermittlungseinheit umfassen, um das vorstehend erläuterte Zerspanungsleistungssignal zu bestimmen, sowie eine Analyseeinrichtung, die dazu ausgebildet ist, zu analysieren, wie sich das Zerspanungsleistungssignal während der Bearbeitung eines Werkstücks zeitlich verändert. Auch kann die Maschinensteuerung eine Zerspanungsenergieermittlungseinrichtung umfassen, um für jedes Werkstück den Zerspanungsenergieindikator zu berechnen, sowie eine weitere Analyseeinrichtung, die dazu ausgebildet ist, zu analysieren, wie sich der Zerspanungsenergieindikator von Werkstück zu Werkstück eines Fertigungsloses verändert. Diese Einrichtungen können in Software realisiert sein, z.B. indem die Maschinensteuerung einen Mikroprozessor umfasst, der dazu programmiert ist, die genannten Aufgaben auszuführen. Die Zerspanungsleistungsermittlungseinrichtung kann beispielsweise dazu ausgebildet sein, Stromsignale aus einem Achsmodul für die Ansteuerung der Werkzeugspindel auszulesen, und die Zerspanungsenergieermittlungseinrichtung kann dazu ausgebildet sein, diese Signale über die Bearbeitung eines Werkstücks hinweg zu integrieren.

Die Maschinensteuerung kann auch die vorstehend erwähnte Datenbank umfassen, in der die Messgrössen und ggfs. daraus abgeleitete Grössen zusammen mit einer eindeutigen Kennung des jeweiligen Werkstücks und gegebenenfalls weiteren Prozessparametern gespeichert werden können. Die Datenbank kann aber auch in einem separaten Server implementiert sein, der mit der Maschinensteuerung über ein Netzwerk verbunden ist.

Die Maschinensteuerung kann zudem eine Ausgabeeinrichtung zum Ausgeben eines Warnsignals aufweisen, z.B. ein Interface zur Abgabe des Warnsignals in digitaler Form an eine nachgeschaltete Einrichtung, ein Display zur Anzeige des Warnsignals, eine akustische Ausgabeeinrichtung usw.

Die Wälzschleifmaschine kann zudem vorteilhaft die schon erwähnte Abrichteinrichtung aufweisen, und die Maschinensteuerung kann eine Abrichtsteuerungseinrichtung zur Steuerung der Abrichtspindel sowie eine Abrichtüberwachungseinrichtung umfassen, um das genannte Kontaktsignal und/oder Abrichtleistungssignal zu ermitteln und aus dem Verlauf dieser Signale den genannten Ausbruchindikator bzw. das Ausbruchmass zu ermitteln. Diese Einheiten können wiederum in Software realisiert sein. Zudem kann die Maschinensteuerung eine Ausgabeeinrichtung aufweisen, um den Ausbruchindikator bzw. das Ausbruchmass auszugeben.

Zur Detektion von Berührungen des Abrichtwerkzeugs mit der Schleifscheibe kann die Wälzschleifmaschine den schon erwähnten Akustiksensor aufweisen. Die Wälzschleifmaschine kann zudem eine Leistungsmesseinrichtung zur Ermittlung der Leistungsaufnahme der Abrichtspindel und/oder eine entsprechende Leistungsmesseinrichtung zur Ermittlung der Leistungsaufnahme der Werkzeugspindel aufweisen. Dazu kann die entsprechende Leistungsmesseinrichtung beispielsweise dazu ausgebildet sein, Stromsignale aus einem Achsmodul für die Ansteuerung der Abrichtspindel bzw. der Werkzeugspindel auszulesen.

Zur Durchführung der Prozessüberwachung kann die Wälzschleifmaschine ein entsprechend konfiguriertes Kontrollgerät umfassen. Dieses kann insbesondere die schon erwähnte Abmassermittlungseinrichtung, Drehwinkelermittlungseinrichtung, Drehratenermittlungseinrichtung, Zerspanungsleistungsermittlungseinheit, Zerspanungsenergieermittlungseinrichtung, Analyseeinrichtungen, Abrichtüberwachungseinrichtung, Leistungsmesseinrichtungen und Ausgabeeinrichtungen umfassen.

Die vorliegende Erfindung stellt des Weiteren ein Computerprogramm zur Verfügung. Das Computerprogramm umfasst Befehle, welche bewirken, dass eine Maschinensteuerung in einer Wälzschleifmaschine der vorstehend erläuterten Art, insbesondere einer oder mehrere Prozessoren der Maschinensteuerung, das vorstehend erläuterte Verfahren ausführt. Das Computerprogramm kann in einer geeigneten Speichereinrichtung, beispielsweise einem separaten Kontrollgerät mit Server, gespeichert sein. Insbesondere wird auch ein computerlesbares Medium vorgeschlagen, auf dem das Computerprogramm gespeichert ist. Das Medium kann ein nichtflüchtiges Medium sein, beispielsweise ein Flash-Speicher, eine CD, eine Festplatte usw.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Wälzschleifmaschine;
- Fig. 2: einen vergrösserten Ausschnitt aus der Fig. 1 im Bereich II;
- Fig. 3: einen vergrösserten Ausschnitt aus der Fig. 1 im Bereich III;
- Fig. 4: vier Fotografien einer Schleifscheibe mit Ausbrüchen in einem oder mehreren Schneckengängen;
- Fig. 5: eine Fotografie eines geschädigten Zahnrads;
- Fig. 6: ein Diagramm, das beispielhaft charakteristische Signale der Einzentriersonde bei guter und schlechter Vorbearbeitung (Schwankung Zahndickenabmass) von zwei Werkstücken anzeigt;
- Fig. 7: ein Diagramm, das in Teil (a) den zeitlichen Verlauf der Drehzahl der Werkstückspindel beim Hochfahren auf Arbeitsdrehzahl und in Teil (b) die resultierenden Signale der Einzentriersonde bei unvollständiger Mitnahme des Werkstücks zeigt;
- Fig. 8: ein Diagramm, das den zeitlichen Verlauf der Stromaufnahme der Werkzeugspindel bei der Werkstückbearbeitung zeigt, wenn die Schleifscheibe in Kontakt mit einem Werkstück gelangt, das sich nicht in der korrekten Winkellage befindet,
- Fig. 9: ein Diagramm, das zeitliche Verläufe der Stromaufnahme der Werkzeugspindel bei der Werkstückbearbeitung ohne Ausbruch und mit einem grossem Ausbruch der Schleifscheibe zeigt;
- Fig. 10: ein Diagramm, das den Verlauf der mittleren Stromaufnahme der Werkzeugspindel bei der Werkstückbearbeitung über ein Fertigungslos hinweg mit einer Schleifscheibe mit grossem Ausbruch zeigt;
- Fig. 11: ein Diagramm, das beispielhaft den zeitlichen Verlauf eines Akustiksignals beim Kopfabrichten einer Schleifscheibe mit einem Ausbruch zeigt;
- Fig. 12: zwei Diagramme, die den zeitlichen Verlauf der Stromaufnahme der Abrichtspindel zeigen, (a) für eine Schleifscheibe ohne Ausbrüche, und (b) für eine Schleifscheibe mit einem Ausbruch;
- Fig. 13: zwei Diagramme, die den zeitlichen Verlauf der Stromaufnahme der Abrichtspindel (Teil (a)) bzw. der Werkzeugspindel (Teil (b)) beim Abrichten einer Schleifscheibe mit einem Ausbruch zeigen;
- Fig. 14: ein Flussdiagramm für ein Verfahren zur Prozessüberwachung, um Schleifscheibenausbrüche frühzeitig zu erkennen; und
- Fig. 15: ein Flussdiagramm für weitere Vorgänge nach der Erkennung eines Schleifscheibenausbruchs.

### BESCHREIBUNG BEVORZUGTER AUSFÜHRUNGSFORMEN

### Beispielhafter Aufbau einer Wälzschleifmaschine

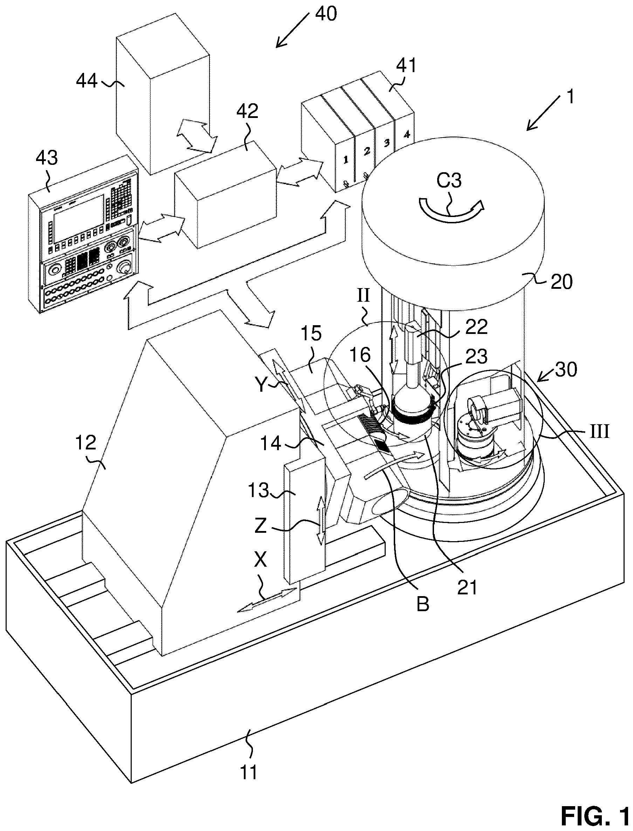

In der Fig. 1 ist beispielhaft eine Wälzschleifmaschine 1 dargestellt. Die Maschine weist ein Maschinenbett 11 auf, auf dem ein Werkzeugträger 12 entlang einer Zustellrichtung X verschiebbar geführt ist. Der Werkzeugträger 12 trägt einen Axialschlitten 13, der entlang einer Axialrichtung Z gegenüber dem Werkzeugträger 12 verschiebbar geführt ist. Auf dem Axialschlitten 13 ist ein Schleifkopf 14 montiert, der zur Anpassung an den Schrägungswinkel der zu bearbeitenden Verzahnung um eine parallel zur X-Achse verlaufende Schwenkachse (die sogenannte A-Achse) verschwenkbar ist. Der Schleifkopf 14 wiederum trägt einen Shiftschlitten, auf dem eine Werkzeugspindel 15 entlang einer Shiftachse Y gegenüber dem Schleifkopf 14 verschiebbar ist. Auf der Werkzeugspindel 15 ist eine schneckenförmig profilierte Schleifscheibe 16 aufgespannt. Die Schleifscheibe 16 wird von der Werkzeugspindel 15 zu einer Drehung um eine Werkzeugachse B angetrieben.

Das Maschinenbett 11 trägt des Weiteren einen schwenkbaren Werkstückträger 20 in Form eines Drehturms, der um eine Achse C3 zwischen mindestens drei Stellungen verschwenkbar ist. Auf dem Werkstückträger 20 sind einander diametral gegenüberliegend zwei identische Werkstückspindeln montiert, von denen in der Fig. 1 nur eine Werkstückspindel 21 mit zugehörigem Reitstock 22 sichtbar ist. Die in der Fig. 1 sichtbare Werkstückspindel befindet sich in einer Bearbeitungsposition, in der ein auf ihr aufgespanntes Werkstück 23 mit der Schleifscheibe 16 bearbeitet werden kann. Die andere, um 180° versetzt angeordnete und in der Fig.1 nicht sichtbare Werkstückspindel befindet sich in einer Werkstückwechselposition, in der ein fertig bearbeitetes Werkstück von dieser Spindel entnommen und ein neues Rohteil aufgespannt werden kann. Um 90° zu den Werkstückspindeln versetzt ist eine Abrichteinrichtung 30 montiert.

Alle angetriebenen Achsen der Wälzschleifmaschine 1 werden durch eine Maschinensteuerung 40 digital gesteuert. Die Maschinensteuerung 40 empfängt Sensorsignale von einer Vielzahl von Sensoren in der Wälzschleifmaschine 1 und gibt in Abhängigkeit von diesen Sensorsignalen Steuersignale an die Aktoren der Wälzschleifmaschine 1 ab. Die Maschinensteuerung 40 umfasst insbesondere mehrere Achsmodule 41, welche an ihren Ausgängen Steuersignale für jeweils eine Maschinenachse (d.h. für mindestens einen Aktor, der zum Antrieb der betreffenden Maschinenachse dient, wie z.B. einen Servomotor) bereitstellen. Sie umfasst des Weiteren eine Bedientafel 43 sowie ein Kontrollgerät 42 mit Steuerrechner, das mit der Bedientafel 43 und den Achsmodulen 41 zusammenwirkt. Das Kontrollgerät 42 empfängt Bedienerbefehle von der Bedientafel 43 sowie Sensorsignale und errechnet daraus Steuerbefehle für die Achsmodule. Er gibt des Weiteren auf Basis der Sensorsignale Betriebsparameter an die Bedientafel 43 zur Anzeige aus.

Mit dem Kontrollgerät 42 ist ein Server 44 verbunden. Das Kontrollgerät 42 übermittelt für jedes Werkstück eine eindeutige Kennung sowie ausgewählte Betriebsparameter (insbesondere Messgrössen und daraus abgeleitete Grössen) an den Server 44. Der Server 44 speichert diese Daten in einer Datenbank, so dass für jedes Werkstück nachträglich die zugehörigen Betriebsparameter abgerufen werden können. Der Server 44 kann maschinenintern angeordnet sein, oder er kann entfernt von der Maschine angeordnet sein. Im letzteren Fall kann der Server 44 mit dem Kontrollgerät 42 über ein Netzwerk verbunden sein, insbesondere über ein betriebsinternes LAN, über ein WAN oder über das Internet. Der Server 44 ist dazu ausgebildet, bevorzugt Daten von einer einzigen Wälzschleifmaschine zu empfangen und zu verwalten. Beim Einsatz mehrerer Wälzschleifmaschinen wird in der Regel ein zweiter Server eingesetzt, weil damit ein zentraler Zugriff auf die abgespeicherten Daten und ein besseres Handling der grossen Datenmengen erfolgen kann. Weiterhin sind diese Daten auf einem zweiten Server besser abgesichert.

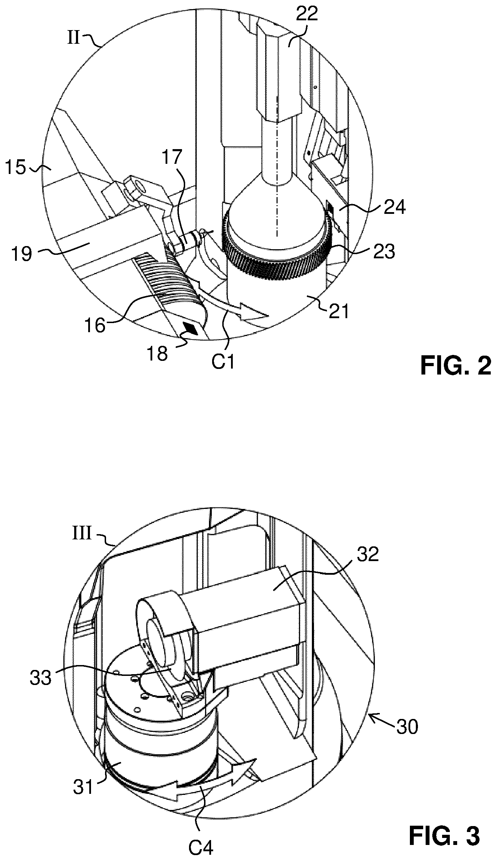

In der Fig. 2 ist der Ausschnitt II aus der Fig. 1 vergrössert dargestellt. Man erkennt die Werkzeugspindel 15 mit der darauf aufgespannten Schleifscheibe 16. An einem feststehenden Teil der Werkzeugspindel 15 ist ein Messtaster 17 schwenkbar montiert. Dieser Messtaster 17 kann wahlweise zwischen der Messstellung der Fig. 2 und einer Parkstellung verschwenkt werden. In der Messstellung kann der Messtaster 17 dazu eingesetzt werden, die Verzahnung eines Werkstücks 23 auf der Werkstückspindel 21 tastend zu vermessen. Dies geschieht "inline", d.h., noch während sich das Werkstück 23 auf der Werkstückspindel 21 befindet. Dadurch können Bearbeitungsfehler frühzeitig erkannt werden. In der Parkstellung befindet sich der Messtaster 17 in einem Bereich, in dem er vor Kollisionen mit der Werkstückspindel 21, dem Reitstock 22, Werkstück 23 und weiteren Komponenten auf dem Werkstückträger 20 geschützt ist. Während der Werkstückbearbeitung befindet sich der Messtaster 17 in dieser Parkstellung.

Auf einer der Schleifscheibe 16 abgewandten Seite des Werkstücks 23 ist eine Einzentriersonde 24 angeordnet. Die Einzentriersonde 24 ist im vorliegenden Beispiel gemäss der Druckschrift WO 2017/194251 A1 ausgestaltet und angeordnet. Bezüglich der Funktionsweise und Anordnung einer Einzentriersonde wird ausdrücklich auf die genannte Druckschrift verwiesen. Insbesondere kann die Einzentriersonde 24 einen induktiv oder kapazitiv arbeitenden Näherungssensor umfassen, wie er aus dem Stand der Technik wohlbekannt ist. Es ist aber auch denkbar, einen optisch arbeitenden Sensor für die Einzentrieroperation zu verwenden, der z.B. einen Lichtstrahl auf die zu vermessende Verzahnung richtet und das von dieser reflektierte Licht detektiert, oder der die Unterbrechung eines Lichtstrahls durch die zu vermessende Verzahnung detektiert, während diese um die Werkstückachse C1 rotiert. Weiterhin ist denkbar, dass auf der Einzentriersonde 24 ein oder mehrere weitere Sensoren angeordnet sind, die Prozessdaten direkt am Werkstück erfassen können, wie dies beispielsweise in US 6,577,917 B1 vorgeschlagen wurde. Solche weiteren Sensoren können beispielsweise einen zweiten Einzentriersensor für eine zweite Verzahnung, einen Temperatursensor, einen weiteren Körperschallsensor, einen Pneumatiksensor usw. umfassen.

Des Weiteren ist in der Fig. 2 rein symbolisch ein Akustiksensor 18 angedeutet. Der Akustiksensor 18 dient dazu, den bei der Schleifbearbeitung eines Werkstücks und beim Abrichten der Schleifscheibe entstehenden Körperschall der Werkzeugspindel 15 aufzunehmen. In Realität wird der Akustiksensor meist nicht (wie in der Fig 2 angedeutet) an einem Gehäuseteil, sondern z.B. direkt am Stator des Antriebsmotors der Werkzeugspindel 15 angeordnet sein, um eine effiziente Schallübertragung zu gewährleisten. Akustiksensoren bzw. Körperschallsensoren der genannten Art sind an sich wohlbekannt und werden in Wälzschleifmaschinen routinemässig eingesetzt.

Eine Kühlmitteldüse 19 richtet einen Kühlmittelstrahl in die Bearbeitungszone. Um Geräusche aufzuzeichnen, die über diesen Kühlmittelstrahl übertragen werden, kann ein weiterer, nicht dargestellter Akustiksensor vorgesehen sein.

In der Fig. 3 ist der Ausschnitt III aus der Fig. 1 vergrössert dargestellt. Man erkennt hier besonders gut die Abrichteinrichtung 30. Auf einem Schwenkantrieb 31 ist, um eine Achse C4 schwenkbar, eine Abrichtspindel 32 angeordnet, auf der ein scheibenförmiges Abrichtwerkzeug 33 aufgespannt ist. Stattdessen oder zusätzlich kann auch ein feststehendes Abrichtwerkzeug vorgesehen sein, insbesondere ein sogenannter Kopfabrichter, der dazu vorgesehen ist, lediglich mit den Kopfbereichen der Schneckengänge der Schleifscheibe in Eingriff zu kommen, um diese Kopfbereiche abzurichten.

### Bearbeitung eines Werkstückloses

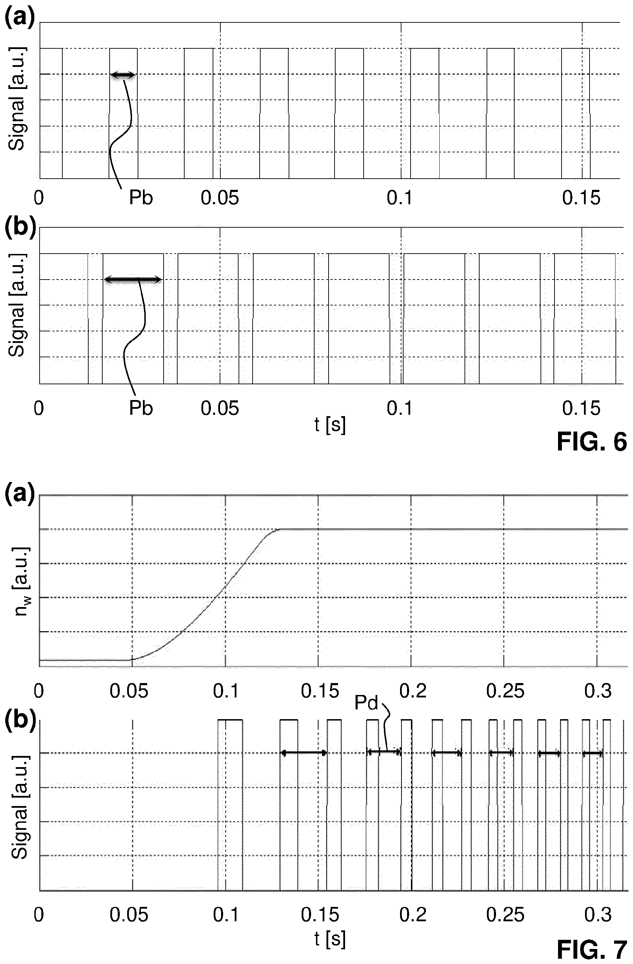

Um ein noch unbearbeitetes Werkstück (Rohteil) zu bearbeiten, wird das Werkstück durch einen automatischen Werkstückwechsler auf derjenigen Werkstückspindel aufgespannt, die sich in der Werkstückwechselposition befindet. Der Werkstückwechsel erfolgt zeitparallel zur Bearbeitung eines anderen Werkstücks auf der anderen Werkstückspindel, die sich in der Bearbeitungsposition befindet. Wenn das neu zu bearbeitende Werkstück aufgespannt ist und die Bearbeitung des anderen Werkstücks abgeschlossen ist, wird der Werkstückträger 20 um 180° um die C3-Achse geschwenkt, so dass die Spindel mit dem neu zu bearbeitenden Werkstück in die Bearbeitungsposition gelangt. Vor und/oder während des Schwenkvorgangs wird mit Hilfe der zugeordneten Einzentriersonde eine Einzentrieroperation durchgeführt. Dazu wird die Werkstückspindel 21 in Drehung versetzt, und die Lage der Zahnlücken des Werkstücks 23 wird mit Hilfe der Einzentriersonde 24 vermessen. Auf dieser Basis wird der Wälzwinkel festgelegt. Zudem können mit Hilfe der Einzentriersonde schon vor Beginn der Bearbeitung Hinweise auf eine übermässige Variation des Zahndickenabmasses und andere Vorbearbeitungsfehler abgeleitet werden. Dies wird nachstehend in Zusammenhang mit der Fig. 6 noch näher erläutert.

Wenn die Werkstückspindel, die das zu bearbeitende Werkstück 23 trägt, die Bearbeitungsposition erreicht hat, wird das Werkstück 23 durch Verschiebung des Werkzeugträgers 12 entlang der X-Achse kollisionsfrei mit der Schleifscheibe 16 in Eingriff gebracht. Das Werkstück 23 wird nun durch die Schleifscheibe 16 im Wälzeingriff bearbeitet. Währenddessen wird die Werkzeugspindel 15 langsam kontinuierlich entlang der Shiftachse Y verschoben, um laufend noch unverbrauchte Bereiche der Schleifscheibe 16 bei der Bearbeitung zum Einsatz kommen zu lassen (sogenannte Shiftbewegung). Sobald die Bearbeitung des Werkstücks 23 abgeschlossen ist, wird dieses optional inline mit Hilfe des Messtasters 17 vermessen.

Zeitparallel zur Werkstückbearbeitung wird das fertig bearbeitete Werkstück von der anderen Werkstückspindel entnommen, und es wird ein weiteres Rohteil auf dieser Spindel aufgespannt. Bei jeder Schwenkung des Werkstückträgers um die C3-Achse wird vor dem Schwenken oder innerhalb der Schwenkzeit, also zeitneutral, ein Monitoring ausgewählter Komponenten durchgeführt, und der Bearbeitungsprozess wird erst dann weitergeführt, wenn alle definierten Anforderungen erfüllt sind.

Wenn nach der Bearbeitung einer bestimmten Zahl von Werkstücken die Nutzung der Schleifscheibe 16 so weit fortgeschritten ist, dass die Schleifscheibe zu stumpf und/oder die Flankengeometrie zu ungenau ist, dann wird die Schleifscheibe abgerichtet. Dazu wird der Werkstückträger 20 um ±90° geschwenkt, so dass die Abrichteinrichtung 30 in eine Stellung gelangt, in der sie der Schleifscheibe 16 gegenüber liegt. Die Schleifscheibe 16 wird nun mit dem Abrichtwerkzeug 33 abgerichtet.

### Schleifscheibenausbrüche

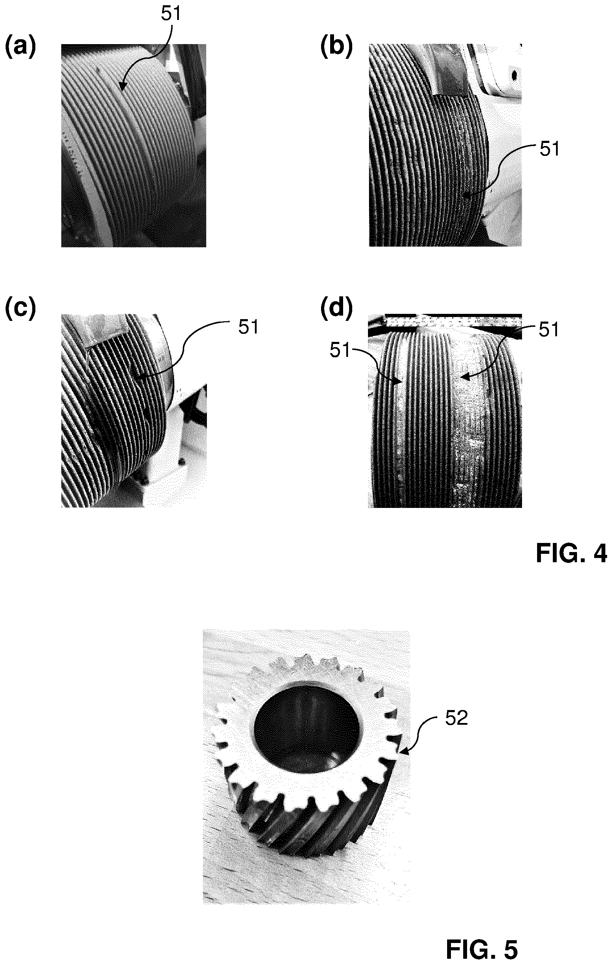

Bei der Bearbeitung kann es zu Schleifscheibenausbrüchen kommen. Die Fig. 4 illustriert verschiedene Formen von Schleifscheibenausbrüchen 51 an Schleifschnecken. In Teil (a) ist ein einziger Schneckengang über einen gewissen Winkelbereich hinweg fast komplett weggebrochen. In Teil (b) sind dagegen mehrere Schneckengänge lokal an vielen verschiedenen Stellen in ihrem Kopfbereich beschädigt. Auch in Teil (c) liegen mehrere lokale Beschädigungen vor, wobei diese aber tiefer als in Teil (b) sind. In Teil (d) ist die Schleifscheibe gleich in zwei Bereichen massiv geschädigt, wobei in diesen Bereichen mehrere benachbarte Schneckengänge fast komplett weggebrochen sind. Alle diese Schadensbilder können in der Praxis vorkommen und führen zu unterschiedlichen Auswirkungen bei der Werkstückbearbeitung.

Die Fig. 5 illustriert ein fehlerhaft bearbeitetes Zahnrad. Alle Zähne 52 sind in ihrem Kopfbereich beschädigt, weil das Zahnrad in einer falschen Winkelposition mit der Schleifscheibe in Eingriff gebracht wurde, so dass die Schleifscheibengänge nicht richtig in die Zahnlücken des Zahnrads eintauchen konnten. Eine solche Situation kann eintreten, wenn die Einzentrieroperation fehlerhaft abgelaufen ist oder wenn das Zahnrad beim Hochfahren der Werkstückspindel auf ihre Betriebsdrehzahl nicht richtig mitgenommen wurde. Häufig führt diese Situation nicht nur zu einer Beschädigung des Zahnrads, sondern auch zu massiven Schleifscheibenausbrüchen der Schleifscheibe. Diese Situation sollte also möglichst frühzeitig erkannt und verhindert werden.

### Hinweise auf mögliche Schleifscheibenausbrüche durch Prozessüberwachung

Um Schleifscheibenausbrüche möglichst zu verhindern oder erfolgte Ausbrüche frühzeitig erkennen zu können, werden während der Bearbeitung eines Fertigungsloses verschiedene Betriebsparameter laufend überwacht. Die Parameter oder daraus abgeleitete Grössen werden zudem in einer Datenbank abgespeichert, um auch nachträgliche Analysen vornehmen zu können. Von besonderer Bedeutung sind im vorliegenden Kontext die Drehzahlen, Winkelpositionen und Stromaufnahmen der Werkzeug-, Werkstück- und Abrichtspindeln, die Drehzahl und Winkelposition des Werkstücks selbst, die Signale der Einzentriersonde sowie die Positionen der Linearachsen der Maschine. Zur Überwachung dient im Ausführungsbeispiel der Figuren 1 bis 3 das Kontrollgerät 42. Insbesondere werden die nachstehend diskutierten Betriebsparameter der Wälzschleifmaschine überwacht:

### (a) Ermittlung von Vorbearbeitungsfehlern mit Hilfe der Einzentriersonde

Die Fig. 6 illustriert typische Signale, wie sie von der Einzentriersonde 24 empfangen werden. Es handelt sich um binäre Signale, die eine logische Eins anzeigen, wenn sich vor der Einzentriersonde ein Zahnkopfbereich befindet, und die eine logische Null anzeigen, wenn sich vor der Einzentriersonde eine Zahnlücke befindet. Die Pulsbreite Pb bzw. das daraus abgeleitete Tastverhältnis der Signale der Einzentriersonde sind dabei ein Mass für die Zahndicke und damit für das Abmass zwischen der gemessenen Dicke und der Solldicke ("Abmassindikator"). In Teil (a) der Fig. 6 ist die Pulsbreite Pb klein, was auf ein kleines (möglicherweise sogar negatives) Abmass hindeutet, während in Teil (b) die Pulsbreite Pb gross ist, was auf ein grosses (möglicherweise zu grosses) Abmass hindeutet. Die Variation der Pulsbreite Pb ist dabei in Fig. 6 bewusst zu Illustrationszwecken übertrieben dargestellt.

Aus dem Signalmuster der Einzentriersonde 24 können also direkte Rückschlüsse auf das Abmass jedes Zahnes gezogen werden. Hieraus können Hinweise auf Vorbearbeitungsfehler wie zu grosses oder ungleichmässiges Abmass abgeleitet werden.

Das Kontrollgerät 42 empfängt die Signale der Einzentriersonde und leitet daraus einen Warnindikator ab, der anzeigt, ob Hinweise auf Vorbearbeitungsfehler vorliegen. Wenn dies der Fall ist, wird die Bearbeitung gestoppt, bevor es zu einem Kontakt zwischen Werkstück 23 und Schleifscheibe 16 kommt, um einer Beschädigung der Schleifscheibe 16 vorzubeugen. Zudem kann der Warnindikator eine Überprüfung der Schleifscheibe auf Beschädigungen durch vorhergehende Werkstücke triggern.

### (b) Überwachung der Drehzahlen von Werkstückspindel und Werkstück

Die Fig. 7 illustriert, wie die Drehzahl *n_{w}* der Werkstückspindel 21 und die daraus resultierende Drehzahl des darauf aufgespannten Werkstücks 23 miteinander verglichen werden. Die Drehzahl *n_{w}* der Werkstückspindel 21 kann direkt aus der Maschinensteuerung ausgelesen werden (Teil (a) der Fig. 7). Die Drehzahl des Werkstücks wird dagegen wiederum mit Hilfe der Einzentriersonde 24 bestimmt. Dazu zeigt die Fig. 7 in Teil (b) typische Signale, wie sie von der Einzentriersonde 24 empfangen werden. Die Signale weisen im vorliegenden Beispiel eine stetig abnehmende Periodendauer Pd auf, während die Werkstückspindel schon die Solldrehzahl erreicht hat. Sie zeigen damit an, dass das Werkstück 23 immer noch beschleunigt, während die Werkstückspindel 21 schon ihre Solldrehzahl erreicht hat. Das Werkstück 23 wird also im vorliegenden Beispiel nicht richtig auf der Werkstückspindel 21 mitgenommen.

Ein solcher Fall kann eintreten, wenn die Toleranzwerte bei der Vorbearbeitung der Werkstückspannbasen, wie Bohrung und Planseiten, überschritten werden. Die Mitnahme des Werkstückes erfolgt in der Regel in einem definierten Reibschluss; d.h., durch das Aufweiten einer Spannzange wirkt ein Reibmoment auf die Werkstückbohrung, und durch eine axiale Anpresskraft wird auf den beiden Planseiten eine radiale Reibkraft erzeugt. Ist die Werkstückbohrung aber zu gross und/oder sind die Planseiten zu schief, dann verringert sich dieser Reibschluss, und ab einem kritischen Wert entsteht ein Schlupf zwischen Werkstückspindel und Werkstück.

Wenn Abweichungen zwischen den Drehraten des Werkstücks und der Werkstückspindel festgestellt werden, ist es sinnvoll, die weitere Bearbeitung sofort zu stoppen, um eine Beschädigung der Schleifscheibe 16 zu verhindern. Da nicht auszuschliessen ist, dass es schon zuvor zu einer Beschädigung der Schleifscheibe 16 gekommen ist, ist es zudem sinnvoll, die Schleifscheibe 16 auf Beschädigungen zu untersuchen.

Zu diesem Zweck überwacht das Kontrollgerät 42 die Signale der Einzentriersonde 24 sowie die Drehzahlsignale der Werkstückspindel aus dem zugeordneten Achsmodul 41. Im Falle einer Abweichung setzt das Kontrollgerät 42 einen Warnindikator. Anhand des Warnindikators wird die Bearbeitung gestoppt, bevor es zu einem Kontakt zwischen Werkstück 23 und Schleifscheibe 16 kommt. Zudem kann der Warnindikator eine Überprüfung der Schleifscheibe auf Beschädigungen durch vorhergehende Werkstücke triggern.

### (c) Überwachung der Drehwinkel von Werkstückspindel und Werkstück

Alternativ oder zusätzlich zum Vergleich der Drehraten kann auch ein Vergleich der Drehwinkel von Werkstückspindel und zugehörigem Werkstück vor und nach der Bearbeitung erfolgen. Auch wenn hier Abweichungen bestehen, deutet dies auf das Vorliegen von Schlupf hin, und es ist sinnvoll, die Schleifscheibe 16 auf mögliche Beschädigungen zu untersuchen. Entsprechend setzt das Kontrollgerät 42 auch in diesem Fall einen Warnindikator.

### (d) Überwachung der momentanen Zerspanungsleistung

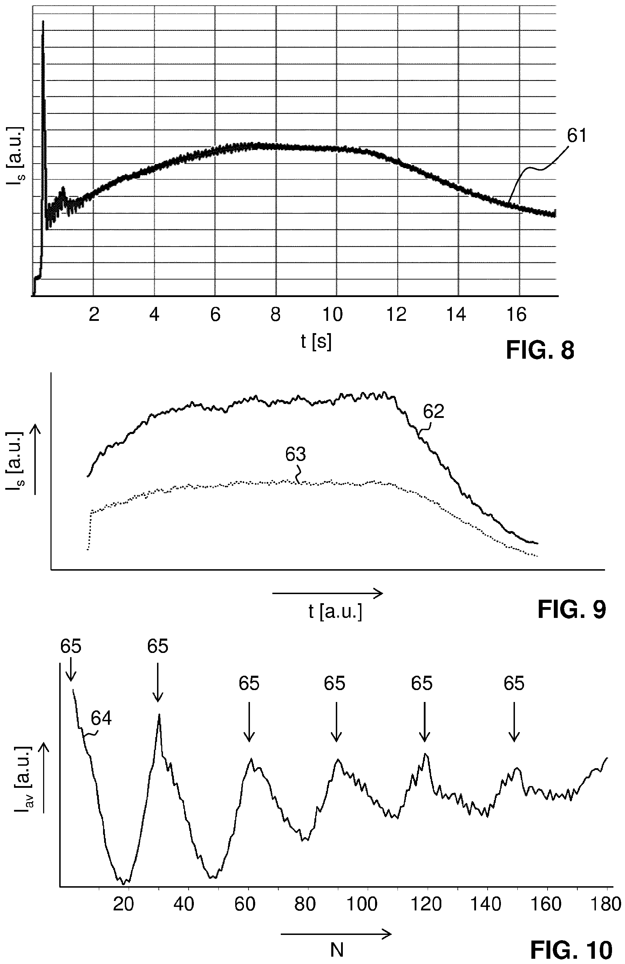

Eine weitere Möglichkeit zur Früherkennung möglicher Schleifscheibenausbrüche ist in der Fig. 8 illustriert. Dies zeigt in Messkurve 61 die Stromaufnahme *Iₛ* der Werkzeugspindel als Funktion der Zeit während der Bearbeitung eines einzelnen Werkstücks. Die Stromaufnahme *Iₛ* der Werkzeugspindel ist ein direkter Indikator der momentanen Zerspanungsleistung. Sie kann insofern als ein Beispiel für ein Zerspanungsleistungssignal aufgefasst werden.

Im vorliegenden Beispiel zeigt die Kurve 61 einen plötzlichen steilen Anstieg und einen anschliessenden steilen Abfall dieser Stromaufnahme am Anfang der Bearbeitung. Dies deutet darauf hin, dass eine Kollision eines der Zähne des Werkstücks mit einem Schneckengang der Schleifscheibe 16 stattgefunden hat. Auch in diesem Fall ist es sinnvoll, die weitere Bearbeitung sofort zu stoppen und die Schleifscheibe 16 auf mögliche Beschädigungen zu untersuchen. Wiederum setzt dazu das Kontrollgerägt 42 einen entsprechenden Warnindikator.

### (c) Überwachung der Zerspanungsenergie pro Werkstück

Eine weitere Möglichkeit zur (allerdings relativ späten) Erkennung möglicher Schleifscheibenausbrüche beruht auf der Überwachung der Energie, die für die spanende Bearbeitung jedes Werkstücks aufgewendet wurde ("Zerspanungsenergie"). Diese ist ein Mass für die zerspante Materialmenge während der Bearbeitung des betreffenden Werkstücks. Bei der Bearbeitung mit einem durch Ausbruch beschädigten Schleifschneckenbereich ist die zerspante Materialmenge im Allgemeinen geringer als bei der Bearbeitung mit einem unbeschädigten Schleifschneckenbereich. Daher ist es möglich, durch Überwachung der Zerspanungsenergie pro Werkstück Hinweise auf einen möglichen Schleifscheibenausbruch zu erhalten.

Dies ist in den Figuren 9 und 10 näher illustriert. Die Figur 9 zeigt in Messkurve 62 die Stromaufnahme *Iₛ* der Werkzeugspindel als Funktion der Zeit während der Bearbeitung eines einzelnen Werkstücks mit einer unbeschädigten Schleifschnecke. Die Messkurve 63 stellt dagegen den Verlauf der Stromaufnahme bei der Bearbeitung mit einer Schleifschnecke im Bereich eines grossen Ausbruchs dar. Aufgrund des Ausbruchs sind die Zerspanungsleistung und daher die Stromaufnahme der Werkzeugspindel stark reduziert. Das Integral der Stromaufnahme während der Zeitdauer, die zur Bearbeitung eines einzelnen Werkstücks benötigt wird (also die Fläche unter der jeweiligen Messkurve), ist ein Mass für die gesamte Zerspanungsenergie, die für das Werkstück aufgewendet wurde, also für die zerspante Materialmenge pro Werkstück. Bei der Bearbeitung im Bereich eines Schleifscheibenausbruchs ist dieses Integral kleiner als bei der Bearbeitung mit einem unbeschädigten Bereich der Schleifscheibe.

Statt dem Integral der Stromaufnahme können auch andere Grössen als Mass für die totale Zerspanungsenergie herangezogen werden, z.B. der Mittelwert, das Maximum (ggfs. nach einer Glättungsoperation, um Ausreisser auszublenden) oder das Ergebnis eines Fits an eine vorgegebene Form des Stromverlaufs. Das Mass für die totale Zerspanungsenergie wird im vorliegenden Kontext auch als Zerspanungsenergieindikator bezeichnet.

Die Fig. 10 illustriert, wie sich die mittlere Stromaufnahme *Iₐᵥ* der Werkzeugspindel bei der Bearbeitung von Werkstück zu Werkstück N verändert, wenn die Schleifscheibe beschädigt ist. Die Bearbeitung beginnt mit einer Schleifscheibe, die einen grossen zentralen Ausbruch aufweist. Zu Beginn des Bearbeitungszyklus werden die Werkstücke mit einem ersten, unbeschädigten Ende der Schleifscheibe bearbeitet. Im Verlauf der Bearbeitung wird die Schleifscheibe kontinuierlich geshiftet, so dass zunehmend der Bereich mit dem Ausbruch zur Bearbeitung dient. Gegen Ende des Zyklus kommt das gegenüberliegende, ebenfalls unbeschädigte Ende der Schleifscheibe in Eingriff mit dem Werkstück. Entsprechend nimmt die mittlere Stromaufnahme *Iₐᵥ* der Werkzeugspindel zunächst ab, um dann gegen Ende des Zyklus wieder anzusteigen. Es resultiert ein charakteristischer Verlauf der mittleren Stromaufnahme *Iₐᵥ* vom ersten bis zum N- ten Werkstück.

Jeweils am Punkt 65 endet ein Zyklus, die Schleifscheibe wird abgerichtet, und ein neuer Zyklus beginnt. Beim Abrichten werden die beschädigten Schneckengänge nach und nach wieder hergestellt, so dass die Veränderungen der mittleren Stromaufnahme *Iₐᵥ* in späteren Zyklen immer kleiner werden.

Ein Stromverlauf 64, wie er in der Fig. 10 beispielhaft dargestellt ist, kann also als Indiz für einen Schleifscheibenausbruch gewertet werden. Um zu überprüfen, ob tatsächlich ein Ausbruch vorliegt, ist es auch hier sinnvoll, die Bearbeitung zu stoppen und die Schleifscheibe auf mögliche Beschädigungen zu untersuchen. Dazu setzt auch in diesem Fall das Kontrollgerät 42 einen entsprechenden Warnindikator.

### Automatisierte Überprüfung der Schleifscheibe auf Ausbrüche

Eine Überprüfung der Schleifscheibe auf mögliche Beschädigungen kann dadurch automatisch erfolgen, dass die Schleifscheibe im Kopfbereich ihrer Schneckengänge mit einem Abrichtwerkzeug überfahren wird und die Berührung zwischen der Schleifscheibe und dem Abrichtwerkzeug detektiert wird.

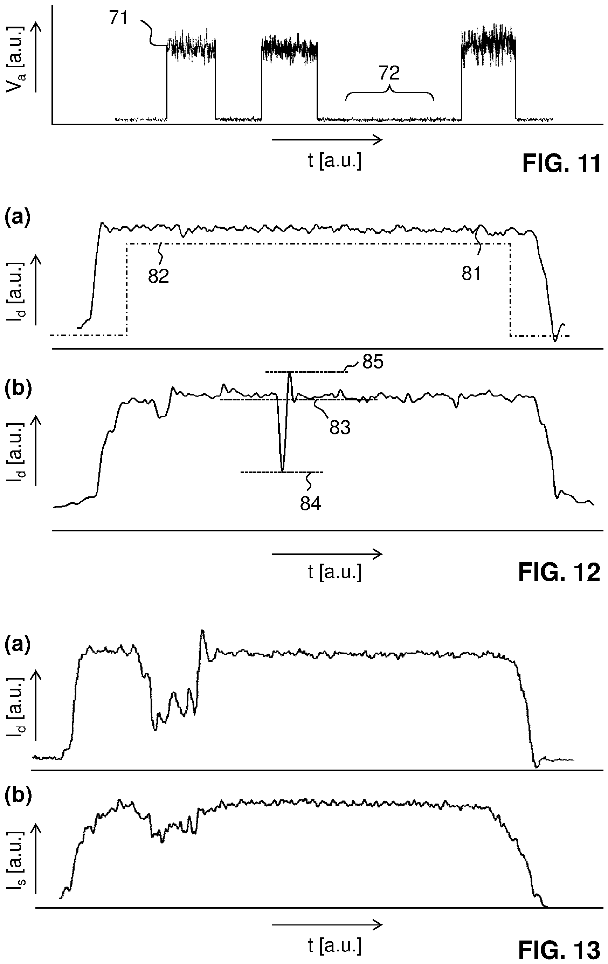

Die Detektion der Berührung kann akustisch erfolgen, wie in der Fig. 11 illustriert ist. Dargestellt ist als Messkurve 71 beispielhaft der zeitliche Verlauf eines Akustiksignals *Vₐ*, wie es beispielsweise durch den in der Fig. 2 angedeuteten Akustiksensor 18 ermittelt werden kann, während eines Abrichtvorgangs, bei dem das Abrichtwerkzeug bewusst nur mit den Kopfbereichen der Schneckengänge in Kontakt gebracht wird. Das Signal zeigt an, wann der Abrichter in Eingriff und ausser Eingriff mit den Kopfbereichen gelangt. Bei einer unbeschädigten Schleifscheibe ist ein periodisches Signal zu erwarten. Wenn das Signal dagegen Lücken aufweist, wie die Lücke 72 in Fig. 11, zeigt dies einen Ausbruch in einem Schneckengang an.

Alternativ kann auch direkt automatisch ein Abrichtvorgang gestartet werden, wie dies nachstehend beschrieben ist, da auch beim Abrichten sicher detektierbar ist, ob Schleifscheibenausbrüche vorliegen. Nachteilig ist jedoch, dass beim Abrichten eine wesentlich niedere Schleifscheibendrehzahl verwendet werden muss und sich damit die Nebenzeit für diese Kontrollmassnahme etwas vergrössert.

Auch andere Verfahren zur automatischen Überprüfung der Schleifscheibe auf Beschädigungen sind denkbar. So ist es z.B. möglich, die Schleifscheibe mit einem optischen Sensor auf Beschädigungen zu untersuchen, oder es ist möglich, die Schleifscheibe mit Hilfe der Geräusche, die der Kühlmittelstrahl aus der Kühlmitteldüse 19 beim Auftreffen auf die Schleifscheibe verursacht, auf Beschädigungen zu untersuchen. Körperschallmessungen über den Kühlmittelstrahl sind an sich bekannt (siehe z.B. Klaus Nordmann, "Prozessüberwachung beim Schleifen und Abrichten", Schleifen + Polieren 05/2004, Fachverlag Möller, Velbert (DE), Seiten 52-56), wurden jedoch nicht zur Erkennung von Schleifscheibenausbrüchen herangezogen.

### Weitere Charakterisierung des Schleifscheibenausbruchs

Wenn auf diese Weise sicher ein Ausbruch bestätigt wurde, ist es sinnvoll, die Schleifschnecke vollständig abzurichten und dabei weitere Charakteristika des Ausbruchs zu ermitteln und/oder den Ausbruch zu beseitigen. Dies ist in den Figuren 12 und 13 illustriert.

Die Fig. 12 illustriert, wie ein Schleifscheibenausbruch über Strommessungen beim Abrichten näher charakterisiert werden kann. Die Fig. 12 zeigt in Teil (a) eine Messkurve 81, die einen typischen Verlauf der Stromaufnahme *I_{d}* der Abrichtspindel als Funktion der Zeit beim Abrichten einer Schleifscheibe darstellt, wenn die Schleifscheibe gleichmässig abgenutzt ist und keine Ausbrüche aufweist. Die Messkurve 81 liegt jederzeit oberhalb einer unteren Hüllkurve 82. In Teil (b) ist der Verlauf der Stromaufnahme *I_{d}* für eine Schleifscheibe mit einem singulären, tiefen Ausbruch dargestellt. In demjenigen Zeitraum, in dem das Abrichtwerkzeug im Bereich des Schleifscheibenausbruchs arbeitet, zeigt die Stromaufnahme *I_{d}* starke Fluktuationen, insbesondere einen starken Einbruch.

Im einfachsten Fall lassen sich solche Fluktuationen dadurch detektieren, dass überwacht wird, ob der Wert der Stromaufnahme unter die untere Hüllkurve 82 absinkt. In Bereichen, in denen dies der Fall ist, kann auf einen Schleifscheibenausbruch geschlossen werden. Es können selbstverständlich aber auch ausgefeiltere Methoden zur Erkennung von Fluktuationen der Stromaufnahme eingesetzt werden. Beispielsweise kann ein Mittelwert 83 der Stromaufnahme gebildet werden, und es kann überwacht werden, ob Abweichungen hiervon nach unten (hier: beim Minimalwert 84) und/oder nach oben (hier: beim Maximalwert 85) innerhalb eines bestimmten Toleranzbandes liegen. Unabhängig davon, wie im Einzelnen die Erkennung der Fluktuationen erfolgt, kann anhand des Zeitpunkts bzw. Drehwinkels, an dem die Fluktuationen erfolgen, auf die Position des Ausbruchs entlang des betroffenen Schneckengangs geschlossen werden. Aus der Grösse der Fluktuationen kann auf den Grad der Beschädigung des Schneckengangs geschlossen werden.

Die Fig. 13 illustriert, dass nicht nur die Stromaufnahme der Abrichtspindel, sondern auch die Stromaufnahme der Werkzeugspindel zur Charakterisierung von Schleifscheibenausbrüchen genutzt werden kann. In Teil (a) ist der zeitliche Verlauf der Stromaufnahme *I_{d}* der Abrichtspindel, in Teil (b) der Verlauf der Stromaufnahme *Iₛ* der Werkzeugspindel während des Abrichtens einer Schleifscheibe mit einem Ausbruch dargestellt. Man erkennt, dass nicht nur die Stromaufnahme der Abrichtspindel, sondern auch die Stromaufnahme der Werkzeugspindel in dem Zeitraum, in dem das Abrichten im Bereich des Ausbruchs erfolgt, Fluktuationen zeigt. Allerdings sind diese Fluktuationen bei der Stromaufnahme der Abrichtspindel ausgeprägter, so dass in der Regel die Stromaufnahme der Abrichtspindel als Messgrösse zur Charakterisierung eines Schleifscheibenausbruchs gegenüber der Stromaufnahme der Werkzeugspindel vorzuziehen ist.

Durch ggfs. mehrmaliges Abrichten lässt sich der so charakterisierte Schleifscheibenausbruch beseitigen. Wenn der Ausbruch sehr gross ist und seine Beseitigung durch Abrichten zu viel Zeit benötigen würde, kann es auch sinnvoll sein, auf weitere Abrichtvorgänge zu verzichten und stattdessen die beschädigte Schleifscheibe auszuwechseln oder die Schleifschnecke nur noch in ihren unbeschädigten Bereichen für die weitere Werkstückbearbeitung einzusetzen.

### Beispiel für ein Verfahren zur automatischen Prozesskontrolle

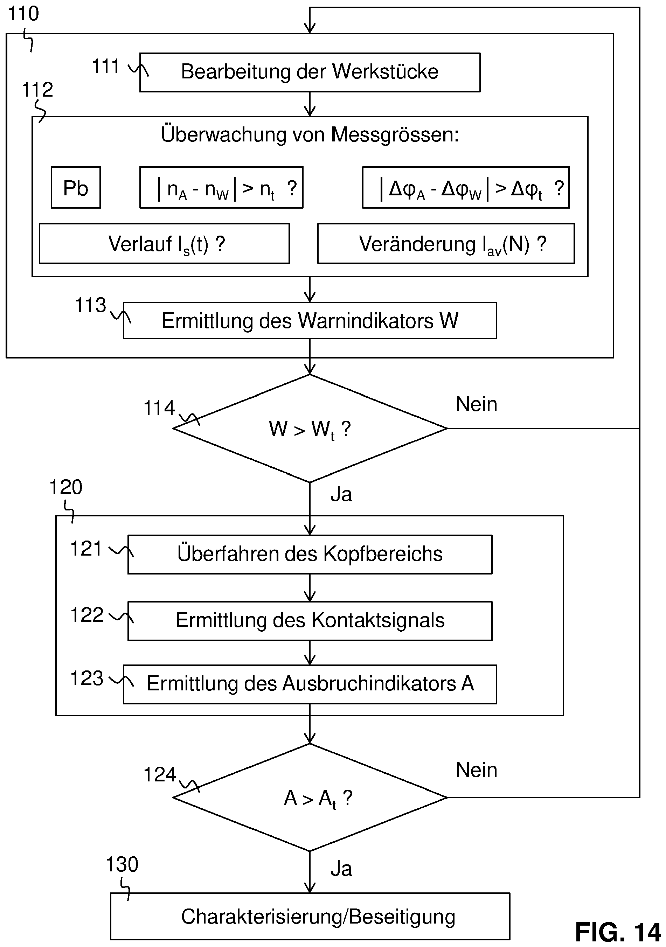

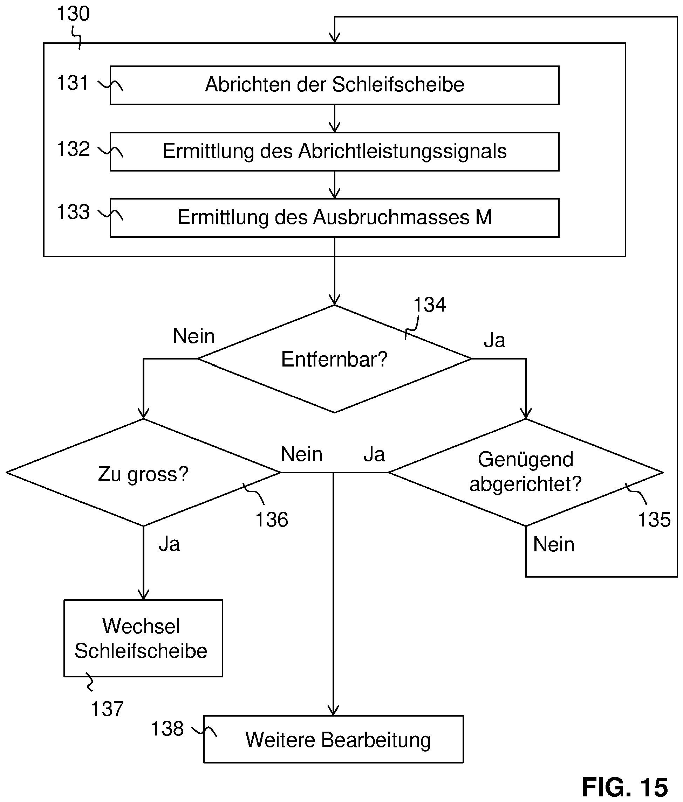

Die Figuren 14 und 15 illustrieren beispielhaft ein mögliches Verfahren zur automatischen Prozesskontrolle, das die obigen Überlegungen umsetzt.

Im Bearbeitungsvorgang 110 werden Werkstücke eines Werkstückloses nacheinander mit der Wälzschleifmaschine bearbeitet. Vor und während der Bearbeitung 111 jedes Werkstücks werden im Überwachungsschritt 112 unter anderem die vorstehend erläuterten Messgrössen ermittelt und überwacht. Insbesondere wird die Pulsbreite Pb der Signale der Einzentriersonde überwacht, um festzustellen, ob Vorbearbeitungsfehler vorliegen. Zudem wird überwacht, ob die Differenz zwischen der Drehzahl *n_{W}* der Werkstückspindel und der Drehzahl *n_{A}* des Werkstücks betragsmässig grösser als ein (klein gewählter) Schwellwert *nₜ* ist. Ausserdem wird überwacht, ob die Differenz zwischen der Winkeländerung *Δϕ_{W}* der Werkstückspindel und der Winkeländerung *Δϕ_{A}* des Werkstücks im Verlauf der Bearbeitung betragsmässig grösser als ein (ebenfalls klein gewählter) Schwellwert *Δϕₜ* ist.

Zudem wird der Verlauf der Stromaufnahme *Iₛ*(*t*) der Werkzeugspindel für jedes Werkstück überwacht, und es wird die Veränderung des gemittelten Spindelstroms *Iₐᵥ*(*N*) von Werkstück zu Werkstück N überwacht. Aus dem Ergebnis dieser Überwachungen wird in Schritt 113 fortlaufend ein Warnindikator W ermittelt.

Anhand des Warnindikators werden in einem Entscheidungsschritt 114 automatisch die folgenden Entscheidungen getroffen:
1. Wenn der Warnindikator keine Probleme anzeigt (z.B. solange er kleiner ist als ein Schwellwert Wₜ), wird die Werkstückbearbeitung normal fortgesetzt.
2. Wenn der Warnindikator auf ein mögliches Problem hindeutet, wird die Bearbeitung des Werkstücks vorläufig gestoppt. Anhand des Warnindikators wird entschieden, ob das Werkstück unmittelbar ausgesondert wird (dies ist z.B. dann sinnvoll, wenn der Warnindikator auf eine fehlerhafte Vorbearbeitung oder eine schlupfbehaftete Aufspannung des Werkstücks hindeutet), oder ob zunächst eine Überprüfung der Schleifscheibe abgewartet wird.

Anschliessend wird die Schleifscheibe in Schritt 120 auf einen möglichen Ausbruch überprüft. Im vorliegenden Beispiel wird dazu in Schritt 121 der Kopfbereich der Schleifschneckengänge mit dem Abrichtwerkzeug überfahren. In Schritt 122 wird durch akustische Messungen oder Strommessungen ermittelt, ob Kontakt zwischen dem Abrichtwerkzeug und der Schleifschnecke vorliegt, und es wird entsprechend ein Kontaktsignal abgegeben. In Schritt 123 wird aus dem zeitlichen Verlauf des Kontaktsignals ein Ausbruchindikator A bestimmt. Im Entscheidungsschritt 124 wird geprüft, ob der Ausbruchindikator A einen bestimmten Schwellwert Aₜ überschreitet.

Wenn dies nicht der Fall ist, wird die Werkstückbearbeitung fortgesetzt. Dabei wird gegebenenfalls die Abtragleistung reduziert, um die Wahrscheinlichkeit zu verringern, dass der Warnindikator bei nachfolgenden Werkstücken wieder mögliche Probleme anzeigt.

Wenn andererseits der Ausbruchindikator den Schwellwert überschreitet, wird der Schleifscheibenausbruch im Vorgang 130 näher charakterisiert und ggfs. beseitigt. Dazu wird die Schleifscheibe in der Regel mit mehreren Abrichthüben abgerichtet (Schritt 131), und es wird während des Abrichtens ein Abrichtleistungssignal für jeden Abrichthub ermittelt (Schritt 132). Aus dem Abrichtleistungssignal wird bei jedem Abrichthub ein Ausbruchmass M ermittelt (Schritt 133). Im Entscheidungsschritt 134 wird geprüft, ob das Ausbruchmass M anzeigt, dass der Ausbruch sinnvoll beseitigt werden kann. Wenn dies nicht der Fall ist, wird im Entscheidungsschritt 136 weiter geprüft, ob der Ausbruch auf einen genügend kleinen Bereich der Schleifscheibe begrenzt ist, so dass dennoch weiterhin eine Bearbeitung mit den unbeschädigten Bereichen der Schleifscheibe erfolgen kann. Wenn auch dies nicht sinnvoll möglich ist, wird in Schritt 137 der Bediener angewiesen, die Schleifscheibe auszuwechseln. Wenn andererseits das Ausbruchmass M anzeigt, dass es sinnvoll möglich ist, den Ausbruch durch Abrichten zu beseitigen, wird im Entscheidungsschritt 135 geprüft, ob der zuletzt durchgeführte Abrichtvorgang schon ausgereicht hat, den Ausbruch zu beseitigen. Wenn dies der Fall ist, wird die Bearbeitung fortgesetzt (Schritt 138). Andernfalls wird der Charakterisierungs- und Beseitigungsvorgang 130 so oft wiederholt, bis das Ausbruchmass M anzeigt, dass der Ausbruch genügend beseitigt wurde, und die Bearbeitung wird wiederum fortgesetzt.

Insgesamt kann so bei jedem Werkstück automatisch, schnell und zuverlässig eine Entscheidung getroffen werden, ob eine Bearbeitung erfolgen kann oder ob eine realisierte Bearbeitung im Zweifel gesondert zu prüfen ist.

### Abwandlungen

Während die Erfindung vorstehend anhand von bevorzugten Ausführungsbeispielen erläutert wurde, ist die Erfindung in keiner Weise auf diese Beispiele beschränkt, und es sind vielfältige Abwandlungen möglich, ohne den Bereich der Erfindung zu verlassen. So kann die Wälzschleifmaschine auch anders als in den vorstehend geschilderten Beispielen aufgebaut sein, wie dies dem Fachmann wohlbekannt ist. Das geschilderte Verfahren kann selbstverständlich auch andere Massnahmen zur Überwachung und Entscheidung umfassen.

### Weitere Überlegungen

Zusammenfassend liegen der vorliegenden Erfindung folgende Überlegungen zu Grunde: Trotz der Komplexität beim Wälzschleifen ist eine robuste Prozessführung das Ziel einer automatisierten Fertigung, die möglichst störungsfrei und schnell die geforderte Qualität abliefert. Zudem ist es sinnvoll, jedem Zahnrad eine automatisiert hergestellte Dokumentation über dessen Bearbeitung und Endqualität zuzuordnen. Für eine sichere Rückverfolgbarkeit aller relevanten Fertigungsschritte auf "Knopfdruck" und für eine generalisierende Prozessoptimierung und/oder Effizienzsteigerung sollen Online-Daten zur Verfügung gestellt werden.

Die Erfindung setzt deshalb Mittel ein, dass Hinweise auf Prozessabweichungen, insbesondere Ausbrüche unterschiedlicher Grösse, detektiert werden können und ein Warnsignal ausgegeben wird. Das Warnsignal kann insbesondere anhand von Signalen der Einzentriersonde oder durch die Messung von Stromwerten an der Werkzeugspindel ermittelt werden.

Das Warnsignal kann sofort die Bearbeitung stoppen, das ganz oder teilweise bearbeitete Werkstück wird gegebenenfalls als NIO-Teil mittels Handlinggerät automatisch ausgesondert, und das Kontrollgerät ermittelt und speichert optional die Shiftposition bzw. Y-Position der Schleifschnecke beim Defekt. Danach wird die Schleifscheibe auf Ausbrüche geprüft. Dazu wird bei Arbeitsdrehzahl der Schleifspindel mit einem Abrichter ein Minimalbetrag des Kopfbereiches der Schleifschnecke abgerichtet und dabei der Strom und/oder das Signal eines Akustiksensors erfasst, um Ausbrüche sicher zu erkennen. Alternativ erfolgt eine Prüfung auf Ausbrüche mit einem anderen Verfahren, z.B. optisch, akustisch mittels Kühlmittelstrahl, oder durch einen vollständigen Abrichthub. Dieser Vorgang kann auch in festgelegten Intervallen und ohne Warnsignal von der Einzentriersonde ausgeführt werden, weil damit kleinere Ausbrüche auf der Schleifschnecke erkennbar sind, die nicht durch fehlerhaft bearbeitete Werkstücke entstanden sind. Stellt diese Messung einen Ausbruch fest, dann trifft das Kontrollgerät folgende Entscheidungen:
Weiterbearbeitung des Fertigungsloses und den geschädigten Bereich auf der Schleifschnecke für die weitere Bearbeitung sperren;
Schleifschnecke abrichten und danach eventuell auch mit reduzierten Zerspanungswerten weiterarbeiten; oder
Schleifschnecke auswechseln und mit einer neuen Schleifschnecke die Bearbeitung des Fertigungsloses beenden.

Beim Abrichten der Schleifscheibe ist zu beachten, dass die ersten Abrichthübe üblicherweise mit den Einstellwerten für das Fertigungslos ausgeführt werden. Bei grossen und sehr grossen Ausbrüchen kann deshalb eine grosse Abrichtzeit erforderlich werden. Hierbei kann ein adaptives bzw. selbstlernendes Abrichten zu grossen Zeiteinsparungen führen und ein ebenfalls zeitaufwendiger Wechsel der Schleifschnecke kann entfallen.

Stellt diese Messung aber keinen Ausbruch auf der Schleifschnecke fest, obwohl ein Warnsignal ermittelt wurde, dann trifft das Kontrollgerät folgende Entscheidungen:
Weiterbearbeitung des Fertigungloses mit verringerten Zerspanungswerten;
Bearbeitung des Fertigungsloses stoppen und Bediener informieren.

Dazu kann eine automatische Prozessüberwachung eines Fertigungsloses beim Schleifen und Abrichten mittels einer CNC-Wälzschleifmaschine mit peripherer Automatisierungstechnik für den Werkstücktransport mit Hilfe eines separaten Kontrollgeräts mit angebundenem Server durchgeführt werden. Das Kontrollgerät ist so eingerichtet, dass für jedes Werkstück eines Fertigungsloses bevorzugt alle Sensordaten der Wälzschleifmaschine, die entsprechenden Einstellwerte und Bearbeitungswerte, bevorzugt die Stromwerte an der Werkzeug-, Werkstück- und Abrichtspindel und die Signale der Einzentriersonde permanent erfasst und in einem Server abgespeichert werden. Dabei kann optional bei jedem automatisch durchgeführten Werkstückwechsel ein zeitneutrales Komponenten-Monitoring erfolgen, welches die Bearbeitung freigibt, wenn keine Beanstandung vorliegt. Unter anderem werden auch ein Zerspanungsleistungssignal und ein Zerspanungsenergieindikator ermittelt, die mit den übrigen Daten im Kontrollgerät und nach der Bearbeitung der ersten Werkstücke auch mit den abgespeicherten Daten im Server korreliert werden. Frühzeitig kann dann der Warnindikator ausgegeben werden.

### BEZUGSZEICHENLISTE

- 1: Wälzschleifmaschine
- 11: Maschinenbett
- 12: Werkzeugträger
- 13: Axialschlitten
- 14: Schleifkopf
- 15: Werkzeugspindel
- 16: Schleifscheibe
- 17: Messtaster
- 18: Akustiksensor
- 19: Kühlmitteldüse
- 20: Werkstückträger
- 21: Werkstückspindel
- 22: Reitstock
- 23: Werkstück
- 24: Einzentriersonde
- 31: Schwenkeinrichtung
- 32: Abrichtspindel
- 33: Abrichtwerkzeug
- 40: Maschinensteuerung
- 41: Achsmodule
- 42: Kontrollgerät
- 43: CNC-Bedientafel
- 44: Server
- 51: Schleifscheibenausbruch
- 52: Zahn
- 61-63: Messkurve
- 64: Stromverlauf
- 65: Abrichtzeitpunkt
- 71: Messkurve
- 72: Lücke
- 81: Messkurve
- 82: Hüllkurve
- 83: Mittelwert
- 84: Minimalwert
- 85: Maximalwert
- 110: Bearbeitungsvorgang
- 111: Werkstückbearbeitung
- 112: Überwachung
- 113: Ermittlung von W
- 114: Entscheidungsschritt
- 120: Ausbrucherkennungsvorgang
- 121: Überfahren
- 122: Ermittlung Kontaktsignal
- 123: Ermittlung von A
- 124: Entscheidungsschritt
- 130: Charakterisierung/Entfernung
- 131: Abrichten
- 132: Ermittlung Abrichtleistung
- 133: Ermittlung von M
- 134-136: Entscheidungsschritte
- 137: Schleifscheiben wechsel
- 138: weitere Bearbeitung

- a.u.: willkürliche Einheit (engl.: arbitrary unit)
- A: Ausbruchindikator
- Aₜ: Schwellwert des Ausbruchindikators
- B: Werkzeugachse
- C1: Werkstückachse
- C3: Schwenkachse des Werkstückträgers
- C4: Schwenkachse des Abrichtgeräts
- *Iₐᵥ*: mittlere Stromaufnahme der Werkzeugspindel
- *I_{d}*: Stromaufnahme der Abrichtspindel
- *Iₛ*: Stromaufnahme der Werkzeugspindel
- M: Ausbruchmass
- *n_{A}*: Werkstückdrehzahl
- *nₜ*: Schwellwert der Drehzahldifferenz
- *n_{W}*: Drehzahl der Werkstückspindel
- N: Anzahl Werkstücke im Los
- Pb: Pulsbreite des Einzentriersignals/Zahn
- Pd: Dauer der Signalperiode des Einzentriersignals/Zahn
- t: Zeit
- *Vₐ*: Akustiksignal
- W: Warnindikator
- Wₜ: Schwellwert des Warnindikators
- X: Zustellrichtung
- Y: Shiftachse
- Z: Axialrichtung
- *Δϕ_{A}*: Winkeländerung des Werkstückes
- *Δϕₜ*: Schwellwert der Winkeländerungsdifferenz
- *Δϕ_{W}*: Winkeländerung der Werkstückspindel

## Patentansprüche

1. Verfahren zur automatischen Prozesskontrolle beim kontinuierlichen Wälzschleifen von vorverzahnten Werkstücken (23) mit einer Wälzschleifmaschine (1),
wobei die Wälzschleifmaschine (1) eine Werkzeugspindel (15) und mindestens eine Werkstückspindel (21) aufweist, wobei auf der Werkzeugspindel (15) eine schneckenförmig profilierte Schleifscheibe (16) mit einem oder mehreren Schneckengängen aufgespannt ist, wobei die Schleifscheibe (16) um eine Werkzeugachse (B) drehbar ist, und wobei die Werkstücke (23) auf der mindestens einen Werkstückspindel (21) aufspannbar sind,
wobei das Verfahren aufweist:
Bearbeiten der Werkstücke (23) mit der Wälzschleifmaschine (1), wobei die Werkstücke (23) für die Bearbeitung auf der mindestens einen Werkstückspindel (21) aufgespannt werden und nacheinander in Wälzeingriff mit der Schleifscheibe (16) gebracht werden; und
Überwachen mindestens einer Messgrösse während des Bearbeitens der Werkstücke (23),
wobei aus der mindestens einen überwachten Messgrösse ein Warnindikator (W) für eine unzulässige Prozessabweichung ermittelt wird,
**dadurch gekennzeichnet,**
**dass** es sich bei dem Warnindikator (W) um einen Warnindikator für einen Schleifscheibenausbruch (19) handelt, und
**dass** eine automatische Überprüfung der Schleifscheibe (16) auf einen Schleifscheibenausbruch (19) ausgeführt wird, wenn der Warnindikator (W) auf einen Schleifscheibenausbruch (19) hindeutet.

2. Verfahren nach Anspruch 1, wobei die Wälzschleifmaschine (1) eine Abrichteinrichtung (30) mit einem Abrichtwerkzeug (33) aufweist, und wobei die automatische Überprüfung der Schleifscheibe (16) auf einen Schleifscheibenausbruch (19) folgende Schritte umfasst:
Überfahren eines Kopfbereichs der Schleifscheibe (16) mit dem Abrichtwerkzeug (33);
Ermitteln eines Kontaktsignals während des Überfahrens des Kopfbereichs, wobei das Kontaktsignal einen Kontakt des Abrichtwerkzeugs (33) mit dem Kopfbereich der Schleifscheibe (16) anzeigt; und
Ermitteln eines Ausbruchindikators (A) durch Analyse des Kontaktsignals, wobei der Ausbruchindikator (A) anzeigt, ob ein Schleifscheibenausbruch (19) vorliegt.

3. Verfahren nach Anspruch 2, wobei die Wälzschleifmaschine einen Akustiksensor (18) aufweist, um den Eingriff des Abrichtwerkzeugs (33) mit der Schleifscheibe (16) akustisch zu detektieren, und wobei das Kontaktsignal ein Akustiksignal (*Vₐ*) umfasst, das mit Hilfe des Akustiksensors (18) ermittelt wird.

4. Verfahren nach Anspruch 2 oder 3, wobei die Abrichteinrichtung (30) eine Abrichtspindel (32) aufweist, auf der das Abrichtwerkzeug (33) aufgespannt ist, und wobei das Kontaktsignal ein Kopfabrichtleistungssignal umfasst, das für die Leistungsaufnahme der Abrichtspindel (32) während des Überfahrens des Kopfbereichs repräsentativ ist.

5. Verfahren nach einem der Ansprüche 2 bis 4, wobei der Ausbruchindikator (A) einen Ort des Schleifscheibenausbruchs (19) entlang mindestens eines der Schneckengänge auf der Schleifscheibe (16) anzeigt.

6. Verfahren nach einem der Ansprüche 2 bis 5, wobei das Verfahren umfasst:
Abrichten der Schleifscheibe (16), wenn der Ausbruchindikator (A) das Vorliegen eines Schleifscheibenausbruchs (19) anzeigt.

7. Verfahren nach Anspruch 1, wobei die Wälzschleifmaschine (1) eine Abrichteinrichtung (30) mit einem Abrichtwerkzeug (33) aufweist, und wobei die automatische Überprüfung der Schleifscheibe (16) auf einen Schleifscheibenausbruch (19) ein Abrichten der Schleifscheibe (16) mit mindestens einem Abrichthub umfasst.

8. Verfahren nach Anspruch 6 oder 7, wobei das Verfahren aufweist:
Ermitteln eines Abrichtleistungssignals während des Abrichtens, wobei das Abrichtleistungssignal für die Leistungsaufnahme der Abrichtspindel (32) oder Werkzeugspindel (15) während des Abrichtens repräsentativ ist;
Ermitteln eines Ausbruchmasses (M) durch Analyse des Verlaufs des Abrichtleistungssignals während des Abrichtens, wobei das Ausbruchmass (M) mindestens ein Charakteristikum des Schleifscheibenausbruchs widerspiegelt; und
Wiederholen des Abrichtens der Schleifscheibe in Abhängigkeit vom Ausbruchmass (M),
wobei die Analyse des Verlaufs des Abrichtleistungssignals vorzugsweise einschliesst:
Ermitteln einer Schwankungsgrösse, wobei die Schwankungsgrösse lokale Veränderungen der Grösse des Abrichtleistungssignals entlang mindestens eines der Schneckengänge anzeigt.

9. Verfahren nach einem der vorhergehenden Ansprüche,
wobei die mindestens eine überwachte Messgrösse einen Abmassindikator (Pb) für ein Zahndickenabmass des Werkstücks (23) vor der Bearbeitung umfasst; und/oder
wobei die mindestens eine überwachte Messgrösse eine Drehratenabweichung zwischen einer Drehrate (n_{A}) der Werkstückspindel (21) und einer resultierenden Drehrate (n_{W}) des Werkstücks (23) umfasst, und/oder
wobei die mindestens eine überwachte Messgrösse eine Winkelabweichung umfasst, die durch einen Vergleich einer Winkellage der Werkstückspindel (21) nach der Bearbeitung des Werkstücks (23), einer zugeordneten Winkellage des Werkstücks (23) selbst, einer Winkellage der Werkstückspindel (21) vor der Bearbeitung des Werkstücks und einer zugeordneten Winkellage des Werkstücks selbst ermittelt wurde,
wobei die Wälzschleifmaschine vorzugsweise eine Einzentriersonde (24) aufweist, um berührungslos eine Winkellage eines auf der mindestens einen Werkstückspindel (21) aufgespannten Werkstücks (23) zu bestimmen, und wobei der Abmassindikator (Pb), die Drehrate bzw. die jeweilige Winkellage des Werkstücks (23) vorzugsweise mit der Einzentriersonde (24) erfasst wird.

10. Verfahren nach einem der vorhergehenden Ansprüche, wobei die mindestens eine überwachte Messgrösse ein Zerspanungsleistungssignal umfasst, das eine momentane Zerspanungsleistung während der Bearbeitung jedes einzelnen Werkstücks (23) anzeigt, und wobei der Warnindikator (W) vom zeitlichen Verlauf des Zerspanungsleistungssignals über die Bearbeitung eines Werkstücks hinweg abhängt, insbesondere vom Auftreten eines impulsartigen Anstiegs des Zerspanungsleistungssignals während der Bearbeitung,
wobei das Zerspanungsleistungssignal vorzugsweise ein Mass für die momentane Stromaufnahme (*Iₛ*) der Werkzeugspindel (15) während der Bearbeitung eines Werkstücks (23) ist.

11. Verfahren nach einem der vorhergehenden Ansprüche,
wobei das Verfahren das Ausführen einer kontinuierlichen oder diskontinuierlichen Shiftbewegung zwischen der Schleifscheibe (16) und den Werkstücken (23) entlang der Werkzeugachse (B) umfasst;
wobei die mindestens eine überwachte Messgrösse einen Zerspanungsenergieindikator (*Iₐᵥ*) für jedes Werkstück (23) umfasst,
wobei der Zerspanungsenergieindikator (*Iₐᵥ*) ein Mass für eine integrierte Zerspanungsleistung der Schleifscheibe (16) darstellt, während das jeweilige Werkstück (23) mit der Wälzschleifmaschine (1) bearbeitet wurde; und
wobei der Warnindikator (W) davon abhängt, wie sich der Zerspanungsenergieindikator (*Iₐᵥ*) über die Fertigung mehrerer Werkstücke (23) eines Fertigungsloses hinweg verändert,
wobei der Zerspanungsenergieindikator (*Iₐᵥ*) vorzugsweise ein Mass für das Integral der Stromaufnahme der Werkzeugspindel (15) während der Bearbeitung eines einzelnen Werkstücks (23) ist.

12. Verfahren nach einem der vorhergehenden Ansprüche, wobei die mindestens eine überwachte Messgrösse und/oder mindestens eine daraus abgeleitete Grösse, insbesondere der Warnindikator (W), zusammen mit einer eindeutigen Kennung des jeweiligen Werkstücks (23) in einer Datenbank gespeichert wird.

13. Wälzschleifmaschine (1), aufweisend:
eine Werkzeugspindel (15), auf der eine schneckenförmig profilierte Schleifscheibe (16) mit einem oder mehreren Schneckengängen aufspannbar und zu einer Drehung um eine Werkzeugachse (B) antreibbar ist;
mindestens eine Werkstückspindel (21), um jeweils ein vorverzahntes Werkstück (23) zu einer Drehung um eine Werkstückachse (C1) anzutreiben; und
eine Maschinensteuerung (40);
**dadurch gekennzeichnet, dass** die Maschinensteuerung (40) dazu ausgebildet ist, ein Verfahren nach einem der vorhergehenden Ansprüche auszuführen.

14. Computerprogramm, umfassend Befehle, welche bewirken, dass eine Maschinensteuerung (40) in einer Wälzschleifmaschine (1) nach Anspruch 13 ein Verfahren nach einem der Ansprüche 1 bis 12 ausführt.

15. Computerlesbares Medium, auf dem das Computerprogramm nach Anspruch 14 gespeichert ist.

## Claims

1. A method for automatic process control during continuous generating grinding of pre-toothed workpieces (23) with a generating grinding machine (1),
the generating grinding machine (1) comprising a tool spindle (15) and at least one workpiece spindle (21), a grinding wheel (16) having a worm-shaped profile with one or more worm threads being clamped onto the tool spindle (15), the grinding wheel (16) being rotatable about a tool axis (B), and the workpieces (23) being adapted to be clamped onto the at least one workpiece spindle (21),
wherein the method comprises:
machining the workpieces (23) with the generating grinding machine (1), wherein for the machining the workpieces (23) are clamped onto the at least one workpiece spindle (21) and are successively moved into generating engagement with the grinding wheel (16); and
monitoring at least one measured variable during the machining of the workpieces (23),
wherein a warning indicator (W) for an unacceptable process deviation is determined from the at least one monitored measured variable,
**characterized in that**
the warning indicator (W) is a warning indicator for a grinding wheel breakout (19), and **in that**
the grinding wheel (16) is checked automatically for a grinding wheel breakout (19) if the warning indicator (W) indicates a grinding wheel breakout (19).

2. The method according to Claim 1, wherein the generating grinding machine (1) comprises a dressing device (30) with a dressing tool (33), and wherein the automatic checking of the grinding wheel (16) for a grinding wheel breakout (19) comprises the following steps:
moving the dressing tool (33) over a tip region of the grinding wheel (16);
determining a contact signal during the movement over the tip region, the contact signal indicating contact of the dressing tool (33) with the tip region of the grinding wheel (16); and
determining a breakout indicator (A) by analyzing the contact signal, the breakout indicator (A) indicating whether a grinding wheel breakout (19) is present.

3. The method according to Claim 2, wherein the generating grinding machine comprises an acoustic sensor (18) in order to detect acoustically the engagement of the dressing tool (33) with the grinding wheel (16), and wherein the contact signal comprises an acoustic signal (*Vₐ*) which is determined using the acoustic sensor (18).

4. The method according to Claim 2 or 3, wherein the dressing device (30) comprises a dressing spindle (32) on which the dressing tool (33) is clamped, and wherein the contact signal comprises a tip dressing power signal which is representative of the power consumption of the dressing spindle (32) during the movement over the tip region.

5. The method according to any one of Claims 2 to 4, wherein the breakout indicator (A) indicates a location of the grinding wheel breakout (19) along at least one of the worm threads of the grinding wheel (16).

6. The method according to any one of Claims 2 to 5, wherein the method comprises:
dressing the grinding wheel (16) if the breakout indicator (A) indicates the presence of a grinding wheel breakout (19).

7. The method according to Claim 1, wherein the generating grinding machine (1) comprises a dressing device (30) with a dressing tool (33), and wherein the automatic checking of the grinding wheel (16) for a grinding wheel breakout (19) comprises dressing the grinding wheel (16) with at least one dressing stroke.

8. The method according to Claim 6 or 7, wherein the method comprises:
determining a dressing power signal during the dressing, wherein the dressing power signal is representative of the power consumption of the dressing spindle (32) or tool spindle (15) during the dressing;
determining a breakout measure (M) by analyzing a time course of the dressing power signal during the dressing, the breakout measure (M) reflecting at least one characteristic of the grinding wheel breakout; and
depending on the breakout measure (M), repeating the dressing of the grinding wheel,
wherein the analysis of the time course of the dressing power signal preferably includes:
determining a fluctuation variable, wherein the fluctuation variable indicates local changes in the magnitude of the dressing power signal along at least one of the worm threads.

9. The method according to any one of the preceding claims,
wherein the at least one monitored measured variable comprises a deviation indicator (Pb) for an upper deviation of tooth thickness of the workpiece (23) before the machining; and/or
wherein the at least one monitored measured variable comprises a rotational speed difference between a rotational speed (n_{A}) of the workpiece spindle (21) and a resulting rotational speed (n_{W}) of the workpiece (23), and/or
wherein the at least one monitored measured variable comprises an angular deviation which has been determined by a comparison of an angular position of the workpiece spindle (21) after the machining of the workpiece (23), a corresponding angular position of the workpiece (23) itself, an angular position of the workpiece spindle (21) before the machining of the workpiece and a corresponding angular position of the workpiece itself,
wherein the generating grinding machine preferably comprises a meshing probe (24) for determining in a contactless fashion an angular position of a workpiece (23) which is clamped onto the at least one workpiece spindle (21), and wherein the deviation indicator (Pb), the rotational speed and/or the respective angular position of the workpiece (23) are/is sensed with the meshing probe (24).

10. The method according to any one of the preceding claims, wherein the at least one monitored measured variable comprises a cutting power signal which indicates an instantaneous metal-cutting power during the machining of each individual workpiece (23), and wherein the warning indicator (W) depends on the time course of the cutting power signal over the machining of a workpiece, in particular on the occurrence of a pulse-like increase in the cutting power signal during the machining,
wherein the cutting power signal is preferably a measure of instantaneous power consumption (*Iₛ*) of the tool spindle (15) during the machining of a workpiece (23).

11. The method according to any one of the preceding claims,
wherein the method comprises executing a continuous or discontinuous shifting movement between the grinding wheel (16) and the workpieces (23) along the tool axis (B);
wherein the at least one monitored measured variable comprises a cutting energy indicator (*Iₐᵥ*) for each workpiece (23),
wherein the cutting energy indicator (*Iₐᵥ*) represents a measure for an integrated metal-cutting power of the grinding wheel (16) while the respective workpiece (23) was machined with the generating grinding machine (1); and
wherein the warning indicator (W) depends on how the cutting energy indicator (*Iₐᵥ*) changes over the production of a plurality of workpieces (23) of one production batch,
wherein the cutting energy indicator (*Iₐᵥ*) is preferably a measure of the integral of power consumption of the tool spindle (15) during the machining of an individual workpiece (23).

12. The method according to any one of the preceding claims, wherein the at least one monitored measured variable and/or at least one variable derived therefrom, in particular the warning indicator (W), is stored in a database together with an unambiguous identifier of the respective workpiece (23).

13. A generating grinding machine (1) comprising:
a tool spindle (15) on which a grinding wheel (16) having a worm-shaped profile with one or more worm threads can be clamped and can be driven to rotate about a tool axis (B);
at least one workpiece spindle (21) for driving a pre-toothed workpiece (23) to rotate about a workpiece axis (C1); and
a machine controller (40);
**characterized in that** the machine controller (40) is designed to execute a method according to any one of the preceding claims.

14. A computer program comprising instructions which cause a machine controller (40) in a generating grinding machine (1) according to Claim 13 to carry out a method according to any one of Claims 1 to 12.

15. A computer-readable medium on which the computer program according to Claim 14 is stored.

## Revendications

1. Procédé de contrôle de processus automatique pendant la rectification par génération en continu de pièces à usiner pré-dentées (23) avec une rectifieuse par génération (1),
la rectifieuse par génération (1) comprenant une broche d'outil (15) et au moins une broche porte-pièce (21), une meule (16) ayant un profil en forme de vis sans fin avec un ou plusieurs filets de vis sans fin étant serrée sur la broche d'outil (15), la meule (16) pouvant tourner autour d'un axe d'outil (B), et les pièces à usiner (23) étant adaptées pour être serrées sur l'au moins une broche porte-pièce (21),
dans lequel le procédé comprend:
usiner les pièces à usiner (23) avec la rectifieuse par génération (1), dans laquelle, pour l'usinage, les pièces à usiner (23) sont serrées sur l'au moins une broche porte-pièce (21) et sont successivement engrenées avec la meule (16); et
surveiller au moins une variable mesurée pendant l'usinage des pièces (23),
dans lequel un indicateur d'avertissement (W) pour une déviation inacceptable du processus est déterminé à partir de l'au moins une variable mesurée surveillée,
**caractérisé en ce que**
l'indicateur d'avertissement (W) est un indicateur d'avertissement pour une ébréchure de meule (19), et **en ce que**
la meule (16) est contrôlée automatiquement pour détecter une ébréchure de la meule (19) si l'indicateur d'avertissement (W) indique une ébréchure de la meule (19).

2. Procédé selon la revendication 1, dans lequel la rectifieuse par génération (1) comprend un dispositif de dressage (30) avec un outil de dressage (33), et dans lequel le contrôle automatique de la meule (16) pour détecter une ébréchure de la meule (19) comprend les étapes suivantes:
contourner une partie tête de la meule (16) avec l'outil de dressage (33);
déterminer un signal de contact pendant le contournement de la partie tête, le signal de contact indiquant un contact de l'outil de dressage (33) avec la partie tête de la meule (16); et
déterminer un indicateur d'ébréchure (A) en analysant le signal de contact, l'indicateur d'ébréchure (A) indiquant si une ébréchure de la meule (19) est présente.

3. Procédé selon la revendication 2, dans lequel la rectifieuse par génération comprend un capteur acoustique (18) afin de détecter acoustiquement l'engagement de l'outil de dressage (33) avec la meule (16), et dans lequel le signal de contact comprend un signal acoustique (*Vₐ*) qui est déterminé à l'aide du capteur acoustique (18).

4. Procédé selon la revendication 2 ou 3, dans lequel le dispositif de dressage (30) comprend une broche de dressage (32) sur laquelle l'outil de dressage (33) est serré, et dans lequel le signal de contact comprend un signal de puissance de dressage de pointe qui est représentatif de la consommation de puissance de la broche de dressage (32) pendant le contournement de la partie tête.

5. Procédé selon l'une quelconque des revendications 2 à 4, dans lequel l'indicateur d'ébréchure (A) indique un emplacement de l'ébréchure de la meule (19) le long d'au moins un des filets de vis sans fin de la meule (16).

6. Procédé selon l'une quelconque des revendications 2 à 5, dans lequel le procédé comprend:
dresser la meule (16) si l'indicateur d'ébréchure (A) indique la présence d'une ébréchure de la meule (19).

7. Procédé selon la revendication 1, dans lequel la rectifieuse par génération (1) comprend un dispositif de dressage (30) avec un outil de dressage (33), et dans lequel le contrôle automatique de la meule (16) pour détecter une ébréchure de la meule (19) comprend le dressage de la meule (16) avec au moins une course de dressage.

8. Procédé selon la revendication 6 ou 7, dans lequel le procédé comprend:
déterminer un signal de puissance de dressage pendant le dressage, dans lequel le signal de puissance de dressage est représentatif de la consommation de puissance de la broche de dressage (32) ou de la broche porte-outil (15) pendant le dressage;
déterminer une mesure d'ébréchure (M) en analysant une évolution du signal de puissance de dressage pendant le dressage, la mesure d'ébréchure (M) reflétant au moins une caractéristique de l'ébréchure de la meule; et
répéter le dressage de la meule en fonction de la mesure d'ébréchure (M),
dans lequel l'analyse de l'évolution du signal de puissance de dressage comprend de préférence:
déterminer une variable de fluctuation, la variable de fluctuation indiquant des changements locaux de la magnitude du signal de puissance de dressage le long d'au moins un des fils de vis sans fin.

9. Procédé selon l'une quelconque des revendications précédentes,
dans lequel l'au moins une variable mesurée surveillée comprend un indicateur d'écart (Pb) pour un écart de l'épaisseur de dent de la pièce (23) avant l'usinage; et/ou
dans lequel l'au moins une variable mesurée surveillée comprend une différence de vitesse de rotation entre une vitesse de rotation (n_{A}) de la broche porte-pièce (21) et une vitesse de rotation résultante (nw) de la pièce (23), et/ou
dans lequel l'au moins une variable mesurée surveillée comprend un écart angulaire qui a été déterminé par une comparaison d'une position angulaire de la broche porte-pièce (21) après l'usinage de la pièce (23), d'une position angulaire correspondante de la pièce (23) elle-même, d'une position angulaire de la broche porte-pièce (21) avant l'usinage de la pièce et d'une position angulaire correspondante de la pièce elle-même,
dans lequel la rectifieuse par génération comprend de préférence une sonde d'engrènement (24) pour déterminer sans contact une position angulaire d'une pièce à usiner (23) qui est serrée sur l'au moins une broche porte-pièce (21), et dans lequel l'indicateur d'écart (Pb), la vitesse de rotation et/ou la position angulaire respective de la pièce à usiner (23) sont détectés avec la sonde d'engrènement (24).

10. Procédé selon l'une quelconque des revendications précédentes, dans lequel l'au moins une variable mesurée surveillée comprend un signal de puissance de coupe qui indique une puissance de coupe du métal instantanée pendant l'usinage de chaque pièce individuelle (23), et dans lequel l'indicateur d'avertissement (W) dépend de l'évolution temporelle du signal de puissance de coupe pendant l'usinage d'une pièce, en particulier de l'apparition d'une augmentation sous forme d'impulsion du signal de puissance de coupe pendant l'usinage,
le signal de puissance de coupe étant de préférence une mesure de la consommation de courant (*Iₛ*) instantanée de la broche porte-outil (15) pendant l'usinage d'une pièce (23).

11. Procédé selon l'une quelconque des revendications précédentes,
dans lequel le procédé comprend l'exécution d'un mouvement de déplacement continu ou discontinu entre la meule (16) et les pièces (23) le long de l'axe de l'outil (B);
dans lequel l'au moins une variable mesurée surveillée comprend un indicateur d'énergie de coupe (*Iₐᵥ*) pour chaque pièce (23),
dans lequel l'indicateur d'énergie de coupe (*Iₐᵥ*) représente une mesure pour une puissance intégrée de coupe du métal de la meule (16) pendant que la pièce à usiner respective (23) était usinée avec la rectifieuse par génération (1); et
dans lequel l'indicateur d'avertissement (W) dépend de la manière dont l'indicateur d'énergie de coupe (*Iₐᵥ*) varie au cours de la production d'une pluralité de pièces (23) d'un lot de production,
dans lequel l'indicateur d'énergie de coupe (*Iₐᵥ*) est de préférence une mesure de l'intégrale de la consommation de courant de la broche porte-outil (15) pendant l'usinage d'une pièce individuelle (23).

12. Procédé selon l'une quelconque des revendications précédentes, dans lequel l'au moins une variable mesurée surveillée et/ou l'au moins une variable qui en est dérivée, notamment l'indicateur d'avertissement (W), est sauvegardée dans une base de données avec un identifiant univoque de la pièce respective (23).

13. Une rectifieuse par génération (1) comprenant:
une broche porte-outil (15) sur laquelle une meule (16) ayant un profil en forme de vis sans fin avec un ou plusieurs filets de vis sans fin peut être serrée et pour être entraînée à tourner autour d'un axe d'outil (B);
au moins une broche porte-pièce (21) pour entraîner une pièce pré-dentée (23) à tourner autour d'un axe de pièce (C1); et
un système de commande de machine (40);
**caractérisé en ce que** le système de commande de machine (40) est conçu pour exécuter un procédé selon l'une quelconque des revendications précédentes.

14. Programme d'ordinateur comprenant des instructions qui amènent un système de commande de machine (40) dans une rectifieuse par génération (1) selon la revendication 13 à exécuter un procédé selon l'une quelconque des revendications 1 à 12.

15. Support lisible par ordinateur sur lequel est sauvegardé le programme d'ordinateur selon la revendication 14.
